# EUROPÄISCHE PATENTANMELDUNG

(11) **EP 1 788 015 A1**
(43) Veröffentlichungstag der Anmeldung: **23.05.2007**
(21) Anmeldenummer: 06123532.1
(22) Anmeldetag: 11.11.2003
(51) Int. Cl.: C08K 5/00

(54) **Verwendung UV-Absorber enthaltender Polymerpulver zur Stabilisierung von Polymeren gegen die Einwirkung von UV-Strahlung**

(30) Priorität: 21.11.2002 DE 10254548
(62) Teilanmeldung aus: 03811368.4
(71) Anmelder: BASF Aktiengesellschaft, 67063 Ludwigshafen (DE)
(72) Erfinder: Dyllick-Brenzinger, Rainer, 67346, Speyer (DE); Koch, Oliver, 69214, Eppelheim (DE); Wulff, Dirk, 67105, Schifferstadt (DE); Glaser, Alban, 68159, Mannheim (DE)

(57) **Zusammenfassung**

Die vorliegende Erfindung betrifft die Verwendung feinteiliger, wenigstens einen UV-Absorber enthaltender Polymerpulver zur Stabilisierung von Polymeren, insbesondere Polyolefinen, gegen die Einwirkung von UV-Strahlung.

Weiter betrifft die vorliegende Erfindung Stabilisatormischungen zur Stabilisierung von Polymeren gegen die Einwirkung von UV-Strahlung, Sauerstoff und Wärme, welche u.a. solche Polymerpulver enthalten, und ein Verfahren zur Stabilisierung von Polymeren, insbesondere Polyolefinen, gegen die Einwirkung von UV-Strahlung, Sauerstoff und Wärme, welches dadurch gekennzeichnet ist, dass man den Polymeren, insbesondere den Polyolefinen, solche Stabilisatormischungen in einer effektiven Menge zugibt.

Desweiteren betrifft die vorliegende Erfindung gegen die Einwirkung von UV-Strahlung bzw. gegen die Einwirkung von UV-Strahlung, Sauerstoff und Wärme stabilisierte Polymere, insbesondere Polyolefine, welche eine effektive Menge solcher Polymerpulver bzw. Stabilisatormischungen enthalten, und Gegenstände, welche aus solchermaßen stabilisierten Polymeren, insbesondere Polyolefinen, hergestellt worden sind.

## Beschreibung

Die vorliegende Erfindung betrifft die Verwendung feinteiliger, wenigstens einen UV-Absorber enthaltender Polymerpulver zur Stabilisierung von Polymeren, insbesondere Polyolefinen, gegen die Einwirkung von UV-Strahlung.

Weiter betrifft die vorliegende Erfindung Stabilisatormischungen zur Stabilisierung von Polymeren gegen die Einwirkung von UV-Strahlung, Sauerstoff und Wärme, welche u.a. solche Polymerpulver enthalten, und ein Verfahren zur Stabilisierung von Polymeren, insbesondere Polyolefinen, gegen die Einwirkung von UV-Strahlung, Sauerstoff und Wärme, welches dadurch gekennzeichnet ist, dass man den Polymeren, insbesondere den Polyolefinen, solche Stabilisatormischungen in einer effektiven Menge zugibt.

Desweiteren betrifft die vorliegende Erfindung gegen die Einwirkung von UV-Strahlung bzw. gegen die Einwirkung von UV-Strahlung, Sauerstoff und Wärme stabilisierte Polymere, insbesondere Polyolefine, welche eine effektive Menge solcher Polymerpulver bzw.

Stabilisatormischungen enthalten, und Gegenstände, welche aus solchermaßen stabilisierten Polymeren, insbesondere Polyolefinen, hergestellt worden sind.

Die Einarbeitung von UV-Absorbern zur Stabilisierung von Polymeren gegen die schädigende Einwirkung von UV-Strahlung ist in der kunststoffverarbeitenden Industrie allgemein üblich. Wichtig für den dauerhaften Schutz ist dabei neben der Langzeitstabilität der UV-Absorber auch deren stabile Verteilung im Polymer. Diese wird hauptsächlich durch die Verträglichkeit von UV-Absorber und verwendetem Polymer bestimmt. Ist diese gering, so ist die häufigste Folge, insbesondere bei den erhöhten Temperaturen der Verarbeitung, eine unerwünschte Migration des Stabilisators an die

Polymeroberfläche mit daraus resultierender uneinheitlicher Stabilisierung der Polymermasse.

Aufgabe der vorliegenden Erfindung war es daher, entsprechende UV-Absorber zur Verfügung zu stellen, welche sich migrationsstabil in Polymere einarbeiten lassen und damit eine gleichförmige Stabilisierung der Polymermasse bewirken.

Dementsprechend wurde die Verwendung feinteiliger, wenigstens einen UV-Absorber enthaltender Polymerpulver zur Stabilisierung von Polymeren gegen die Einwirkung von UV-Strahlung gefunden.

Desweiteren wurden Stabilisatormischungen gefunden, welche
(a) mindestens ein Polymerpulver, welches wenigstens einen UV-Absorber enthält,
   und mindestens eine weitere Komponente, ausgewählt aus der Gruppe bestehend aus:
(b) mindestens eine Verbindung ausgewählt aus der Gruppe bestehend aus organischen Phosphiten, organischen Phosphinen und organischen Phosphoniten,
(c) mindestens eine Verbindung ausgewählt aus der Gruppe bestehend aus sterisch gehinderten Phenolen,
(d) mindestens eine Verbindung ausgewählt aus der Gruppe bestehend aus sterisch gehinderten Aminen,
(e) mindestens eine Verbindung ausgewählt aus der Gruppe der Chromane und
(f) mindestens ein organisches oder anorganisches Salz ausgewählt aus der Gruppe bestehend aus Zink-, Calcium-, Magnesium-, Cer-, Eisen- und Mangansalzen
enthalten.

Die UV-Absorber enthaltenden Polymerpulver sind üblicherweise über die Zwischenstufe einer durch Emulsionspolymerisation einer Mikroemulsion erhaltenen Polymerdispersion mit anschließendem Trocknungsschritt zugänglich. Die Herstellung farbstoffhaltiger Polymerdispersionen und entsprechender farbstoffhaltigen Polymerpulver ist in den Schriften WO 99/40123, WO 00/18846, EP 1 092 416 A2 und EP 1 191 041 A2 beschrieben. Dabei werden in den beiden letzteren Schriften unter Farbstoffen im weiteren Sinne auch UV-Absorber verstanden. Solche UV-Absorber enthaltenden Polymersiate werden gemäß den Schriften EP 1 092 416 A2 und EP 1 191 041 A2 zur Formulierung kosmetischer Mittel eingesetzt.

Zur Herstellung der erfindungsgemäß zur Stabilisierung von Polymeren gegen die Einwirkung von UV-Strahlung zu verwendenden, wenigstens einen UV-Absorber enthaltenden Polymerpulver wird daher ausdrücklich auf die zuvor genannten Schriften und die darin zitierte Literatur verweisen. Insbesondere wird auf die Schriften EP 1 092 416 A2 und EP 1 191 041 A2 Bezug genommen, wobei in ersterer die Ausführungen der Absätze [0006] bis [0084] und [0111] bis [0133], insbesondere [0129] bis [0133] und in letzterer die Ausführungen der Absätze [0006] bis [0077] und [0100] bis [0102] von Relevanz sind.

Die Bedeutung, dass die Polymerpulver den/die UV-Absorber "enthalten" im Rahmen der vorliegenden Erfindung dahingehend zu verstehen, dass der/die UV-Absorber entweder homogen verteilt in molekularer oder mikrokristalliner Form in der Polymermatrix vorliegt/vorliegen (hierauf wird z.B. auch auf Seite 3, Zeilen 25 bis 29 der Schrift WO 00/18846 hingewiesen) oder aber vollständig oder auch nur teilweise durch die Polymermatrix umhüllt ist/sind (im Weiteren wird "UV-Absorber" auch im Singular verwendet, selbst wenn im Polymerpulver erfindungsgemäß mehrere UV-Absorber enthalten sein können).

Im Sinne des zuvor Gesagten ist es daher nicht zwingend nötig, dass der UV-Absorber in den zur Herstellung der Polymerdispersionen verwendeten Ausgangsmonomeren (zumindest teilweise) löslich ist, er muss lediglich durch die Ausgangsmonomeren benetzbar sein bzw. während der Emulsionspolymerisation von den Monomertröpfchen (zumindest teilsweise) umschlossen sein und eine geeignete Partikelgrößenverteilung besitzen.

Zur Verbesserung der Benetzbarkeit oder Löslichkeit des UV-Absorbers durch die Ausgangsmonomeren bietet sich auch dessen chemische Modifizierung durch Einführung von Substituenten an. Für den in der Praxis wichtigsten Fall, dass die Ausgangsmonomeren wenig polar oder unpolar sind, lässt sich der UV-Absorber nötigenfalls mit lipophilen Resten, wie in der Schrift EP 1 092 416 A2 in den Absätzen [0012] bis [0015] beschrieben, chemisch variieren.

Als UV-Absorber in den Polymerpulvern kommen in Frage:
4-Aminobenzoesäure und ihre Derivate, insbesondere deren Ester, wie z.B. (ethoxylierter) 4-Aminobenzoesäureethylester oder 2-Ethylhexyl-4,4-dimethylaminobenzoesäure;
Benzoate und Salicylate, wie z.B. Phenylsalicylat, 4-Isopropylbenzylsalicylat, 4-tert.-Butylphenylsalicylat, Octylphenylsalicylat, Benzoylresorcinol, Bis(4-tert.-butylbenzoyl)resorcinol, Dibenzoylresorcinol, 2,4-Di-tert.- butylphenyl-3,5-di-tert.-butyl-4-hydroxybenzoat, Hexadecyl-3,5-di-tert.-butyl-4-hydroxybenzoat, Octadecyl-3,5-di-tert.-butyl-4-hydroxybenzoat, 2-Methyl-4,6-di-tert.-butylphenyl-3,5-di-tert.-butyl-4-hydroxybenzoat;
substituierte Acrylate, wie z.B. Ethyl- oder Isooctyl-α-cyano-β,β-diphenylacrylat (hauptsächlich 2-Ethylhexyl-α-cyano-β,β-diphenylacrylat), Methyl-α-methoxycarbonyl-β-phenylacrylat, Methyl-α-methoxycarbonyl-β-(p-methoxyphenyl)acrylat, Methyl- oder Butyl-α-cyano-β-methyl-β-(p-methoxyphenyl)acrylat, N-(β-methoxycarbonyl-β-cyanovinyl)-2-methylindolin, Octyl-p-methoxycinnamat, Isopentyl-4-methoxycinnamat, Urocaninsäure und deren Salze und Ester;
2-Hydroxybenzophenonderivative, wie z.B. 4-Hydroxy-, 4-Methoxy-, 4-Octyloxy-, 4-Decyloxy-, 4-Dodecyloxy-, 4-Benzyloxy-, 4,2',4'-Trihydroxy-, 2'-Hydroxy-4,4'-dimethoxy-2-hydroxybenzophenon sowie 4-Methoxy-2-hydroxybenzophenon-Sulfonsäure-Natriumsalz;
Ester der 4,4-Diphenylbutadien-1,1-dicarbonsäure, wie z.B. der Bis(2-ethylhexyl)ester;
2-Phenylbenzimidazol-4-sulfonsäure sowie 2-Phenylbenzimidazol-5-sulfonsäure und deren Salze;
Derivate von Benzoxazolen;
Derivative von Benztriazolen und 2-(2'-Hydroxyphenyl)benztriazolen, wie z.B. 2-(2H-Benztriazol-2-yl)-4-methyl-6-(2-methyl-3-((1,1,3,3-tetramethyl-1-(trimethylsilyloxy)disiloxanyl)-propyl)-phenol, 2-(2'-Hydroxy-5'-methylphenyl)benztriazol, 2-(3',5'-Di-tert.-butyl-2'-hydroxyphenyl)benztriazol, 2-(5'-tert.-Butyl-2'-hydroxyphenyl)benztriazol, 2-[2'-Hydroxy-5'-(1,1,3,3-tetramethylbutyl)phenyl]benztriazol, 2-(3',5'-Di-tert.-butyl-2'-hydroxyphenyl)-5-chlorbenztriazol, 2-(3'-tert.-Butyl-2'-hydroxy-5'-methylphenyl)-5-chlorbenztriazol, 2-(3'-sec.-Butyl-5'-tert.-butyl-2'-hydroxyphenyl)benztriazol, 2-(2'-Hydroxy-4'-octyloxyphenyl)-benztriazol, 2-(3',5'-Di-tert.-amyl-2'-hydroxyphenyl)benztriazol, 2-[3',5'-Bis(α,α-dimethylbenzyl)-2'-hydroxyphenyl]benztriazol, 2-[3'-tert.-Butyl-2'-hydroxy-5'-(2-octyloxycarbonylethyl)phenyl]-5-chlorobenztriazol, 2-[3'-tert.-Butyl-5'-(2-(2-ethylhexyloxy)-carbonylethyl)-2'-hydroxyphenyl]-5-chlorobenztriazol, 2[3'-tert.-Butyl-2'-hydroxy-5'-(2-methoxycarbonylethyl)phenyl]-5-chlorobenztriazol, 2-[3'-tert.-Butyl-2'-hydroxy-5'-(2-methoxycarbonylethyl)phenyl]benztriazol, 2-[3'-tert.-Butyl-2'-hydroxy-5'-(2-octyloxycarbonylethyl)phenyl]benztriazol, 2-[3'-tert.-Butyl-5'-(2-(2-ethylhexyloxy)carbonylethyl)-2'-hydroxyphenyl]benztriazol, 2-(3'-Dodecyl-2'-hydroxy-5'-methylphenyl)benztriazol, 2-[3'-tert.-Butyl-2'-hydroxy-5'-(2-isooctyloxycarbonylethyl)phenyl]-benztriazol, 2,2'-Methylen-bis[4-(1,1,3,3-tetramethylbutyl)-6-benztriazol-2-yl-phenol], das vollveresterte Product von 2-[3'-tert.-Butyl-5'-(2-methoxycarbonylethyl)-2'-hydroxyphenyl]-2H-benztriazol mit Polyethylenglycol 300, [R-CH₂CH₂-COo(CH₂)₃-]₂ mit R gleich 3'-tert.-Butyl-4-hydroxy-5'-2H-benztriazol-2-ylphenyl, 2-[2'-Hydroxy-3'-(α,α-dimethylbenzyl)-5'-(1,1,3,3-tetramethylbutyl)phenyl]benztriazol, 2-[2'-Hydroxy-3'-(1,1,3,3-tetramethylbutyl)-5'-(α,α-dimethylbenzyl)phenyl]benztriazol;
Benzylidencampher und seine Derivate, wie sie z. B. in der DE-A 3 836 630 genannt sind, z.B. 3-Benzylidencampher, 3(4'-Methylbenzyliden)d-1-campher;
α-(2-Oxoborn-3-yliden)toluol-4-sulfonsäure und ihre Salze, N,N,N-Trimethyl-4-(2-oxoborn-3-ylidenmethyl)anilinium-methosulfat;
Dibenzoylmethane, wie z.B. 4-tert.-Butyl-4'-methoxydibenzoylmethan;
2,4,6-Triaryltriazin-Verbindungen wie 2,4,6-Tris-{N-[4-(2-ethyl-hex-1-yl)oxycarbonylphenyl]amino}-1,3,5-triazin, 4,4'-((6-(((tert.-Butyl)aminocarbonyl)phenylamino)-1,3,5-triazin-2,4-diyl)imino)bis(benzoesäure-2'-ethylhexylester); und
2-(2-Hydroxyphenyl)-1,3,5-triazine, wie z.B. 2,4,6-Tris(2-hydroxy-4-octyloxyphenyl)1,3,5-triazin, 2-(2-Hydroxy-4-octyloxyphenyl)-4,6-bis(2,4-dimethylphenyl)-1,3,5- triazin, 2-(2,4-Dihydroxyphenyl)-4,6-bis(2,4-dimethylphenyl)-1,3,5-triazin, 2,4-Bis-(2-hydroxy-4-propyloxyphenyl)-6-(2,4-dimethylphenyl)-1,3,5-triazin, 2-(2-Hydroxy-4- octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-[2-Hydroxy-4-(2-hydroxy-3-butyloxypropyloxy)phenyl]-4,6-bis(2,4-dimethylphenyl)-1,3,5-triazin, 2-[2-Hydroxy-4-(2-hydroxy-3-octyloxypropyloxy)phenyl]-4,6-bis-(2,4-di-methylphenyl)-1,3,5-triazin, 2-(2-Hydroxy-4-tridecyloxyphenyl)-4,6-bis(2,4-dimethylphenyl)-1,3,5-triazin, 2-[4-(Dodecyloxy/tridecyloxy-2-hydroxypropoxy)-2-hydroxyphenyl]-4,6-bis(2,4-dimethylphenyl)-1,3,5-triazin, 2-[2-Hydroxy-4(2-hydroxy-3-dodecyloxypropoxy)phenyl]-4,6-bis-(2,4-dimethylphenyl)-1,3,5-triazin, 2-(2-Hydroxy-4-hexyloxyphenyl)-4,6-diphenyl-1,3,5-triazin, 2-(2-Hydroxy-4-methoxyphenyl)4,6-diphenyl-1,3,5-triazin, 2,4,6-Tris[2-hydroxy-4-(3-butoxy-2-hydroxypropoxy)phenyl]-1,3,5-triazin, 2-(2-Hydroxyphenyl)-4-(4-methoxyphenyl)-6-phenyl-1,3,5-triazin, 2-{2-Hydroxy-4-[3-(2-ethylhexyl-1-oxy)-2-hydroxypropyloxy]phenyl}-4,6-bis(2,4-dimethylphenyl)-1,3,5-triazin.

Weitere geeignete UV-Absorber kann man der Schrift Cosmetic Legislation, Vol.1, Cosmetic Products, European Commission 1999, S. 64-66 entnehmen, auf die hiermit Bezug genommen wird.

Bevorzugt finden UV-Absorber enthaltende Polymerpulver Verwendung, deren Polymerteilchen eine Teilchengröße ≤ 500 nm aufweisen.

Weiter finden bevorzugte Verwendung, auch unter Einbeziehung der zuvor beschriebenen bevorzugten Ausführungsform, solche Polymerpulver, welche 0,5 bis 50 Gew.-% des wenigstens einen UV-Absorbers bezogen auf das Gewicht der Polymermatrix enthalten.

Bevorzugte, die Komponente (a) und eine oder mehrere der Komponenten (b) bis (f) enthaltende Stabilisatormischungen sind solche, welche mindestens ein Polymerpulver (a) enthalten, dessen Polymerteilchen eine Teilchengröße ≤ 500 nm aufweisen.

Weitere bevorzugte Stabilisatormischungen, auch unter Einbeziehung der zuvor beschriebenen bevorzugten Ausführungsform, enthalten mindestens ein Polymerpulver (a), in welchem 0,5 bis 50

Gew.-% des wenigstens einen UV-Absorbers bezogen auf das Gewicht der Polymermatrix enthalten sind.

Komponente (b) als möglicher Bestandteil in den erfindungsgemäßen Stabilisatormischungen enthält vorzugsweise mindestens ein organisches Phosphit, organisches Phosphin oder organisches Phosphonit ausgewählt aus der Gruppe der Verbindungen der allgemeinen Formeln (VI) bis (XV): 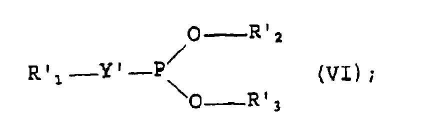 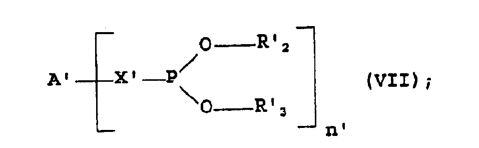 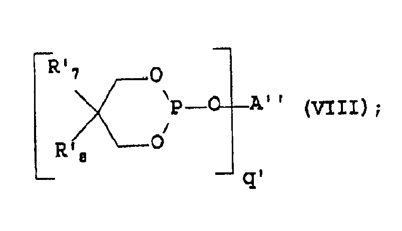 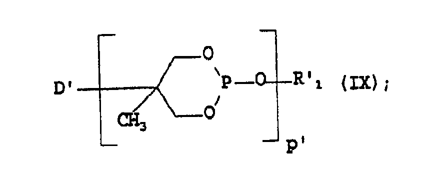 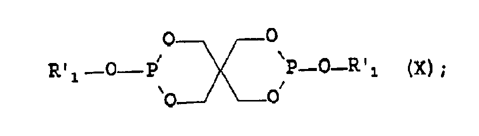 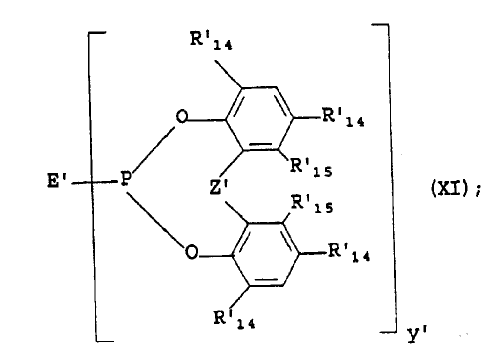 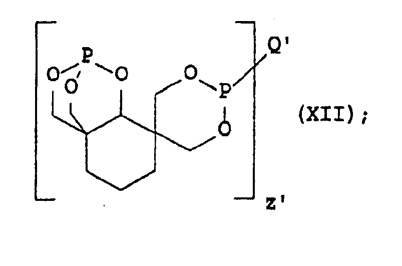 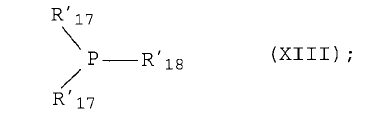 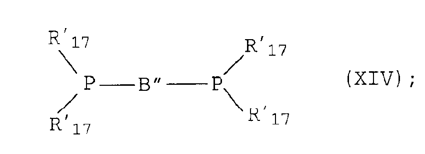 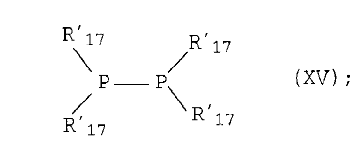 worin bedeuten
- n': 2, 3 oder 4;
- p': 1 oder 2;
- q': 2 oder 3;
- r': eine ganze Zahl von 4 bis 12;
- y': 1, 2 oder 3;
- z': eine ganze Zahl von 1 bis 6;
- A': für n' gleich 2 eine C₂-C₁₈-Alkylengruppe; eine C₂-C₁₂-Alkylengruppe, welche ein Sauerstoff- oder Schwefelatom oder eine NR'₄-Gruppe enthält; eine Gruppe der allgemeinen Formel: 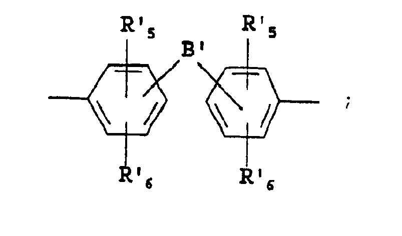 eine Gruppe der allgemeinen Formel: 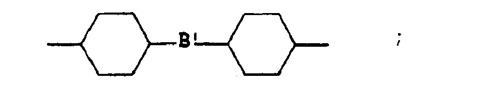 oder
eine Phenylengruppe;
für n' gleich 3 eine Gruppe -C_{r'}H_{2r'-1}-, worin r' die zuvor gegebene Bedeutung besitzt; und
für n' gleich 4 eine Gruppe der allgemeinen Formel 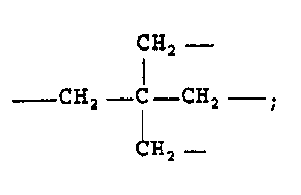
- A": für q' gleich 2 oder 3 dieselbe Bedeutung wie A' für n' gleich 2 oder 3;
- B': eine chemische Einfachbindung; eine Gruppe -CH₂-, -CHR'₄- oder -CR'₁R'₄-; ein Schwefelatom; ein C₅-C₇-Cycloalkyliden; ein mit ein bis vier C₁-C₄-Alkylgruppen in 3-, 4- und/oder 5-Position substituiertes Cyclohexyliden;
- B": gegebenenfalls durch NH, N(C₁-C₂₄-Alkyl), P(C₁-C₂₄-Alkyl), Sauerstoff oder Schwefel unterbrochenes C₁-C₃₀-Alkylen; gegebenenfalls durch NH, N(C₁-C₂₄-Alkyl), P(C₁-C₂₄-Alkyl), Sauerstoff oder Schwefel unterbrochenes ein- oder mehrfach ungesättigtes C₁-C₃₀-Alkyliden; gegebenenfalls durch NH, N(C₁-C₂₄-Alkyl), P(C₁-C₂₄-Alkyl), Sauerstoff oder Schwefel unterbrochenes C₅-C₇-Cycloalkyliden; gegebenenfalls mit C₁-C₂₄-Alkyl, C₃-C₁₂-Cycloalkyl oder C₁-C₁₈-Alkoxy substituiertes C₆-C₂₄-Arylen oder C₅-C₂₄-Heteroarylen;
- D': für p' gleich 1 eine Methylgruppe; und
für p' gleich 2 eine Gruppe -CH₂OCH₂-;
- E': für y' gleich 1 ein C₁-C₂₄-Alkyl; eine Gruppe -OR'₁; oder Halogen;
für y' gleich 2 eine Gruppe -O-A"-O-, wobei A" die Bedeutung wie A' für n' gleich 2 besitzt; und
für y' gleich 3 eine Gruppe R'₄C(CH₂O-)₃, N(CH₂CH₂O-)₃;
- Q': ein z'-wertiger Rest eines Alkohols oder Phenols, welcher jeweils über ein Sauerstoffatom an das Phosphoratom gebunden ist;
- R'₁, R'₂ und R'₃: unabhängig voneinander Wasserstoff; eine Gruppe -COOR'₄- oder -CONR'₄R'₄; C₁-C₂₄-Alkyl, welches ein Sauerstoff- oder Schwefelatom oder ein Gruppe -NR'₄- enthält; C₇-C₉-Phenylalkyl; C₃-C₁₂-Cycloalkyl; gegebenenfalls mit Halogen oder ein bis drei C₁-C₂₄-Alkyl-, C₁-C₂₄-Alkoxy- oder C₇-C₉-Phenylalkylgruppen substituiertes Phenyl oder Naphthyl; oder eine Gruppe der allgemeinen Formel: 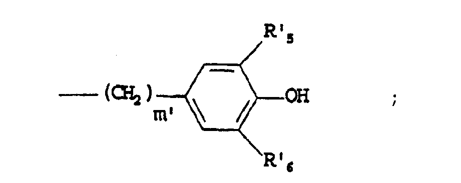 worin m' eine ganze Zahl von 3 bis 6 bedeutet;
- R'₄: Wasserstoff; C₁-C₂₄-Alkyl; C₃-C₁₂-Cycloalkyl; C₇-C₉-Phenylalkyl;
- R'₅ und R'₆: unabhängig voneinander Wasserstoff; C₁-C₆-Alkyl; C₅-C₆-Cycloalkyl;
- R'₇ und R'₈: für q' gleich 2 unabhängig voneinander C₁-C₄-Alkyl oder zusammen eine Pentamethylengruppe;
für q' gleich 3 jeweils eine Methylgruppe;
- R'₁₄: Wasserstoff; C₁-C₉-Alkyl; Cyclohexyl;
- R'₁₅: Wasserstoff; eine Methylgruppe;
- X' und: Y' eine chemische Einfachbindung; ein Sauerstoffatom;
- Z': eine chemische Einfachbindung; eine Methylengruppe; eine Gruppe -C(R'₁₆)₂-; ein Schwefelatom;
- R'₁₆: gleich C₁-C₆-Alkyl;
- R'₁₇ und R'₁₈: unabhängig voneinander Wasserstoff; gegebenenfalls durch NH, N(C₁-C₂₄-Alkyl), Sauerstoff oder Schwefel unterbrochenes C₁-C₂₄-Alkyl; C₇-C₉-Phenylalkyl; ein- oder mehrfach ungesättigtes C₂-C₂₄-Alkenyl; C₂-C₂₄-Alkinyl; C₂-C₈-Alkoxyalkyl; gegebenenfalls substituiertes C₃-C₁₂-Cycloalkyl; gegebenenfalls substituiertes C₅-C₂₄-Heteroaryl; gegebenenfalls substituiertes C₆-C₂₀-Aryl; C₁-C₃₀-Arylalkyl; C₂-C₂₄-Alkoxy.

Besonders bevorzugt enthält Komponente (b) mindestens ein organisches Phosphit, organisches Phosphin oder organisches Phosphonit ausgewählt aus der Gruppe der Verbindungen der allgemeinen Formeln (VI), (VII), (X) und (XI), worin bedeuten
- n': gleich 2;
- y': gleich 1, 2 oder 3;
- A': eine C₂-C₁₈-Alkylengruppe; eine p-Phenylen- oder p-Biphenylengruppe;
- E': für y' gleich 1 ein C₁-C₁₈-Alkyl; eine Gruppe -OR'₁; oder Fluor;
für y' gleich 2 eine p-Biphenylengruppe; und
für y' gleich 3 eine Gruppe N(CH₂CH₂O-)₃;
- R'₁, R'₂ und R'₃: unabhängig voneinander C₂-C₁₈-Alkyl; C₇-C₉-Phenylalkyl; Cyclohexyl; gegebenenfalls mit ein bis drei C₁-C₁₈-Alkylgruppen substituiertes Phenyl;
- R'₁₄: Wasserstoff; C₁-C₉-Alkyl;
- R'₁₅: Wasserstoff; eine Methylgruppe;
- X': chemische Einfachbindung;
- Y': ein Sauerstoffatom;
- Z': eine chemische Einfachbindung; eine Gruppe -C(R'₁₆)₂-;
- R'₁₆: gleich C₁-C₄-Alkyl.

Weitere besonders bevorzugte organische Phosphite oder organische Phosphonite der Komponente (b) sind ausgewählt aus der Gruppe der Verbindungen der allgemeinen Formeln (VI), (VII), (X) und (XI),
worin bedeuten
- n': gleich 2;
- y': gleich 1 oder 3;
- A': eine p-Biphenylengruppe
- E': für y' gleich 1 ein C₁-C₁₈-Alkyl; Fluor;
für y' gleich 3 eine Gruppe N(CH₂CH₂O-)₃;
- R'₁, R'₂ und R'₃: unabhängig voneinander C₂-C₁₈-Alkyl; mit zwei bis drei C₂-C₁₂-Alkylgruppen substituiertes Phenyl;
- R'₁₄: eine Methyl- oder tert.-Butylgruppe;
- R'₁₅: Wasserstoff;
- X': chemische Einfachbindung;
- Y': ein Sauerstoffatom;
- Z': eine chemische Einfachbindung; eine Methylengruppe; eine Gruppe -CH(CH₃)-;

Weitere besonders bevorzugte organische Phosphite der Komponente (b) sind solche der allgemeinen Formel (XVI) 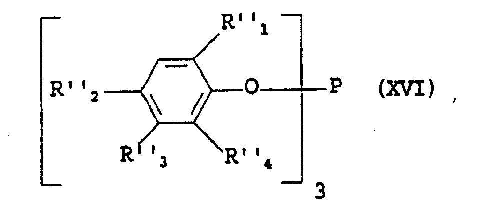 worin bedeuten
- R"₁ und R"₂: unabhängig voneinander Wasserstoff; C₁-C₈-Alkyl; Cyclohexyl; Phenyl;
- R"₃ und R"₄: unabhängig voneinander Wasserstoff; C₁-C₄-Alkyl;

Beispiele für Phosphite und Phosphonite der Komponente (b) sind: Triphenylphosphit, Diphenylalkylphosphite, Phenyldialkylphosphite, Tris(nonylphenyl)phosphit (kommerziell erhältlich unter dem Markennamen Alkanox^{®} TNPP; Great Lakes Chemical Corp.), Trilaurylphosphit, Trioctadecylphosphit, Distearylpentaerythritoldiphosphit, Tris(2,4-di-tert.-butylphenyl)phosphit (kommerziell erhältlich unter dem Markennamen Alkanox^{®} 240; Great Lakes Chemical Corp.); Diisodecylpentaerythritoldiphosphit; Bis(2,4-di-tert.-butylphenyl)pentaerythritoldiphosphit (kommerziell erhältlich unter dem Markennamen Alkanox^{®} P24; Great Lakes Chemical Corp.), Bis(2,6-di-tert.-butyl-4- methylphenyl)pentaerythritoldiphosphit, Bis(2,4-di-tert.-butyl-6-methylphenyl)pentaery-thritoldiphosphit, Bis[2,4,6-tris(tert.-butyl)phenyl]pentaerythritoldiphosphit, Trisstearylsorbitolphosphit, Tetrakis(2,4-di-tert.-butylphenyl)-4,4'-diphenylendiphosphonit (kommerziell erhältlich unter dem Markennamen Alkanox^{®} 24-44; Great Lakes Chemical Corp.), 6-Isooctyloxy-2,4,8,10-tetra-tert.-butyl-12H-dibenzo-[d,g]-1,3,2-dioxaphosphocin, 6-Fluoro-2,4,8,10-tetra-tert.-butyl-12-methyldibenzo[d,g]-1,3,2-dioxaphosphocin, Bis(2,4-di-tert.-butyl-6-methylphenyl)methylphosphit, Bis(2,4-di-tert.-butyl-6-methylphenyl)ethylphosphit (kommerziell erhältlich unter dem Markennamen Irgafos^{®} 38; Ciba Specialty Chemicals), Bis(2,4-dicumylphenyl)pentaerythritoldiphosphit, 2,2',2"-Nitrilo[triethyl-tris (3,3',5,5'-tetra-tert.-butyl-1,1'-biphenyl-2,2'-diyl)-phosphit, 2-Ethylhexyl-(3,3',5,5'-tetra-tert.-butyl-1,1'-biphenyl-2,2'-diyl)phosphit.

Insbesondere sind hier zu nennen: Tris(2,4-di-tert.-butylphenyl)phosphit, Tris(nonylphenyl)phosphit, 6-Fluoro-2,4,8,10-tetra-tert.-butyl-12-methyldibenzo[d,g]-1,3,2-dioxaphosphocin, 6-Isooctyloxy-2,4,8,10-tetra-tert.-butyl-12H-dibenzo-[d,g]-1,3,2-dioxaphosphocin, Bis(2,4-di-tert.-butylphenyl)pentaerythritoldiphosphit, Bis(2,6-di-tert.-butyl-4-methylphenyl)pentaerythritoldiphosphit, Bis(2,4-di-tert.-butyl-6-methylphenyl)ethylphosphit, Bis(2,4-dicumylphenyl)pentaerythritoldiphosphit, Tetrakis(2,4-di-tert.-butylphenyl)-4,4'-diphenylendiphosphonit, das Triphosphit der Formel (XVII) 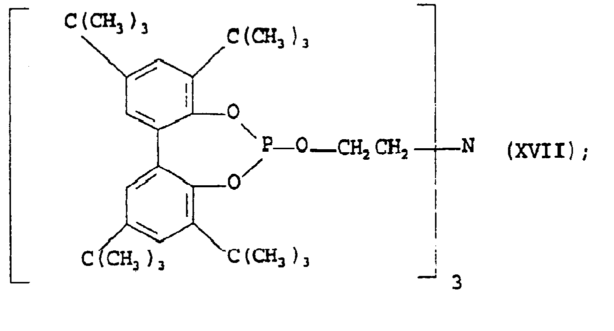 und das Diphosphit der Formel (XVIII)

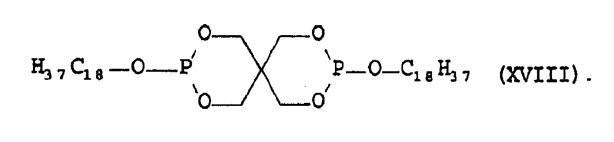

Insbesondere sind hier als mögliche Komponente (b) die organischen Phosphite und Phosphonite: Tris(nonylphenyl)phosphit, Tris(2,4-di-tert.-butylphenyl)phosphit, Bis(2,4-di-tert.-butyl-6-methylphenyl)ethylphosphit, Tetrakis(2,4-di-tert.-butylphenyl)-4,4'-diphenylendiphosphonit, und Bis(2,4-dicumylphenyl)pentaerythritoldiphosphit hervorzuheben.

Die zuvor aufgeführten organischen Phosphite und Phosphonite der Komponente (b) sind an sich bekannte Verbindungen, wobei viele davon kommerziell verfügbar sind.

Sterisch gehinderte Phenole als mögliche Komponente (c) der erfindungsgemäßen Stabilisatormischungen gehorchen vorzugsweise der allgemeinen Formel (XIX) 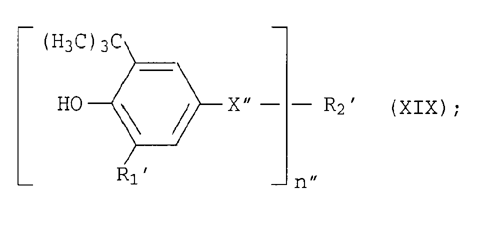 worin bedeuten
- R₁': C₁-C₄-Alkyl;
- n": eine Zahl 1, 2, 3 oder 4;
- X": eine Methylengruppe; oder eine Gruppe der allgemeinen Formeln (XX) oder (XXI) 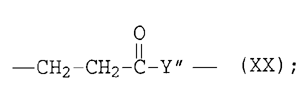 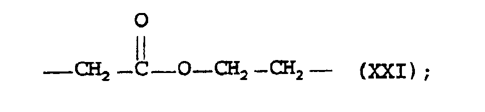 worin Y" bedeutet ein Sauerstoffatom; oder eine Gruppe -NH-;
wobei X" entspricht
für n" gleich 1 einer Gruppe der allgemeinen Formel (XX), in welcher Y" an R₂' gebunden ist und R₂' C₁-C₂₅-Alkyl bedeutet;
für n" gleich 2 einer Gruppe der allgemeinen Formel (XX), in welcher Y" an R₂' gebunden ist und R₂' eine C₂-C₁₂-Alkylengruppe; eine C₄-C₁₂-Alkylengruppe, welche ein oder mehrere Sauerstoff- oder Schwefelatome enthält, bedeutet; wobei für den Fall, dass Y" eine Gruppe -NH- darstellt, R₂' eine chemische Einfachbindung bedeutet;
für n" gleich 3 einer Methylengruppe; einer Gruppe der allgemeinen Formel (XXI), in welcher die Ethylengruppe an R₂' gebunden ist und R₂' einer Gruppe der Formel (XXII) 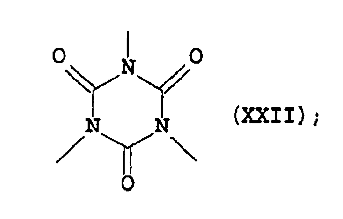 entspricht;
für n" gleich 4 einer Gruppe der allgemeinen Formel (XX), in welcher Y" an R₂ gebunden ist und R₂' einer C₄-C₁₀-Alkantetraylgruppe entspricht.

Beispiele linearer und verzweigter C₁-C₂₅-Alkylgruppen sind Methyl, Ethyl, Propyl, Isopropyl, Butyl, Isobutyl, sec.-Butyl, tert.-Butyl, 2-Ethylbutyl, Pentyl, 1-Methylpentyl, Isopentyl, Neopentyl, tert.-Pentyl, Hexyl, 1,3-Dimethylbutyl, 2-Methylpentyl, Heptyl, Isoheptyl, 1-Methylhexyl, 1-Ethylpentyl, Octyl, 2-Ethylhexyl, Isooctyl, 1,1,3,3-Tetramethylbutyl, 1-Methylheptyl, 3-Methylheptyl, Nonyl, Isononyl, 1,1,3,3-Tetramethylpentyl, Decyl, 1,1,3-Trimethylhexyl, Isodecyl, Undecyl, Dodecyl, 1-Methylundecyl, 1,1,3,3,5,5-Hexamethylhexyl, Tridecyl, Isotridecyl, Tetradecyl, Pentadecyl, Hexadecyl, Heptadecyl, Octadecyl, Nonadecyl, Eicosyl und Doeicosyl(die obigen Bezeichnungen Isooctyl, Isononyl, Isodecyl und Isotridecyl sind Trivialbezeichnungen und stammen von den nach der Oxosynthese erhaltenen Alkoholen - vgl. dazu Ullmanns Encyklopädie der technischen Chemie, 4. Auflage, Band 7, Seiten 215 bis 217, sowie Band 11, Seiten 435 und 436).

R₁' entspricht vorzugsweise einer Methyl- oder tert.-Butylgruppe.

Für n" gleich 1 entspricht R₂' vorzugsweise einer C₁-C₂₀-Alkyl-, insbesondere einer C₄-C₁₈-Alkylgruppe. Besonders sind als Bedeutung für R₂' C₉-C₁₈-Alkyl- und hierbei im Speziellen C₁₄-C₁₈-Alkylgruppen, wie z.B. Octadecyl, hervorzuheben.

Für n" gleich 2 entspricht R₂' üblicherweise einer C₂-C₁₀-Alkylen-, vorzugsweise einer C₂-C₈-Alkylengruppe. Insbesondere entspricht R₂' einer C₄-C₈-Alkylen-, besonders bevorzugt einer C₄-C₆-Alkylengruppe, wie z.B. Hexamethylen. Die Alkylengruppen können hierbei gegebenenfalls noch ein oder mehrere Sauerstoff- oder Schwefelatome enthalten.

Beispiele für lineare oder verzweigte C₂-C₁₂-Alkylengruppen sind Ethylene, Propylen, Tetramethylen, Pentamethylen, Hexamethylen, Heptamethylen, Octamethylen, Decamethylen und Dodecamethylen.

Beispiele für C₄-C₁₂-Alkylengruppen, welche ein oder mehrere Sauerstoff- oder Schwefelatome enthalten, sind -CH₂-O-CH₂CH₂-O-CH₂-, -CH₂-(O-CH₂CH₂)₂-O-CH₂-, -CH₂-(O-CH₂CH₂)₃-O-CH₂-, -CH₂-(O-CH₂CH₂)₄-O-CH₂- und insbesondere -CH₂CH₂-O-CH₂CH₂-O-CH₂CH₂- und -CH₂CH₂-S-CH₂CH₂-.

Beispiele von C₄-C₁₀-Alkantetraylgruppen für R₂', wenn n" gleich 4 ist, sind 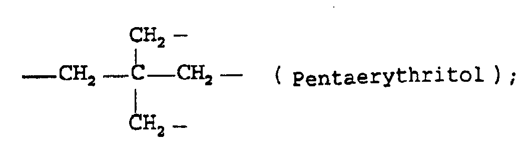 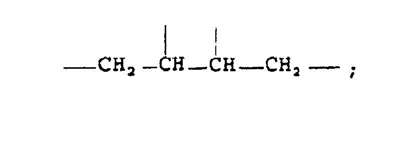 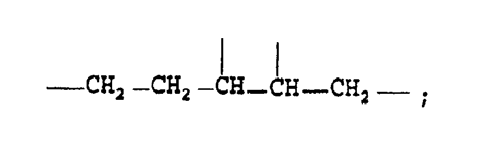 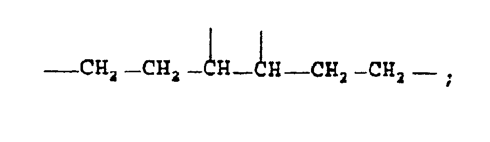 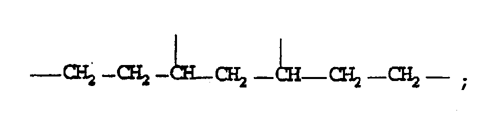 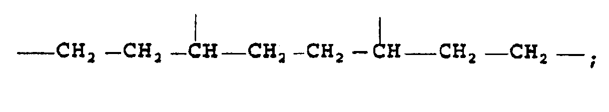 wobei der Pentaerythritolrest bevorzugt ist.

Gemäß der zuvor genannten Bevorzugungen sind bevorzugte sterisch gehinderte Phenole als mögliche Komponente (c) solche, in welchen für n" gleich 1 in der allgemeinen Formel (XIX) der Rest R₂' eine C₁-C₂₀-Alkylgruppe bedeutet.

Gemäß der zuvor genannten Bevorzugungen sind bevorzugte sterisch gehinderte Phenole als mögliche Komponente (c) weiterhin solche, in welchen für n" gleich 2 in der allgemeinen Formel (XIX) der Rest R₂' eine C₂-C₆-Alkylengruppe, eine C₄-C₈-Alkylengruppe, welche ein oder mehrere Sauerstoff- oder Schwefelatome enthält, oder, für den Fall, dass Y" eine Gruppe -NH- darstellt, eine chemische Einfachbindung bedeutet.

Weiterhin sind bevorzugte sterisch gehinderte Phenole als mögliche Komponente (c) auch solche, in welchen für n" gleich 4 in der allgemeinen Formel (XIX) der Rest R₂' eine der zuvor beispielhaft gezeigten C₄-C₆-Alkantetraylgruppe bedeutet.

Bevorzugte sterisch gehinderte Phenole als mögliche Komponente (c) in den erfindungsgemäßen Stabilisatormischungen sind weiter auch solche, in welchen in der allgemeinen Formel (XIX) R₁' einer Methyl- oder tert.-Butylgruppe entspricht, n" einen Wert von 1, 2 oder 4 annimmt, X" einer Gruppe (XX) und Y" einem Sauerstoffatom oder einer Gruppe -NH- entspricht, wobei für
n" gleich 1, R₂' eine C₁₄-C₁₈-Alkylgruppe,
n" gleich 2, R₂' eine C₄-C₆-Alkylen- oder eine, ein oder mehrere Sauerstoff- oder Schwefelatome enthaltende C₄-C₆-Alkylengruppe und
n" gleich 4, R₂' eine C₄-C₆-Alkantetraylgruppe bedeutet.

Als mögliche Komponente (c) sind sterisch gehinderte Phenole interessant, welche der allgemeinen Formel (XIX) entsprechen und der nachfolgend aufgeführten Gruppe zuzuordnen sind: N,N'-Hexamethylenbis[3-(3,5-di-tert.-butyl-4-hydroxyphenyl)propionamid] (kommerziell erhältlich unter dem Markennamen Lowinox^{®} HD-98; Great Lakes Chemical Corp.), Octadecyl-3-(3',5'-di-tert.-butyl-4'-hydroxyphenyl)propionat (kommerziell erhältlich unter dem Markennamen Anox^{™} PP18; Great Lakes Chemical Corp.), Tetrakismethylen- (3,5- di-tert.-butyl-4-hydroxy-hydrocinnamat)methan (kommerziell erhältlich unter dem Markennamen Anox^{™} 20; Great Lakes Chemical Corp.), Triethylenglycolbis[3-(3-tert.-butyl-4-hydroxy-5-methylphenyl)propionat] (kommerziell erhältlich unter dem Markennamen Lowinox^{®} GP-45; Great Lakes Chemical Corp.), 2,2'-Thiodiethylenbis[3(3, 5-di-tert.-butyl-4-hydroxyphenyl)propionat] (kommerziell erhältlich unter dem Markennamen Anox^{™} 70; Great Lakes Chemical Corp.), 1, 3,5-tris(3,5-di-tert.-butyl-4-hydroxybenzyl)isocyanurat (kommerziell erhältlich unter dem Markennamen Anox^{™} IC-14; Great Lakes Chemical Corp.), die Verbindung der Formel 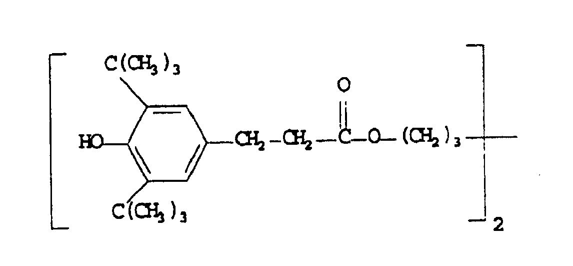 (kommerziell erhältlich unter dem Markennamen Irganox^{®} 259; Ciba Specialty Chemicals), die Verbindung der Formel 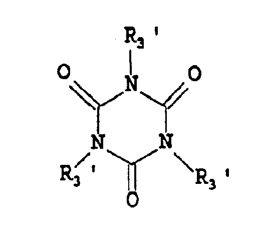 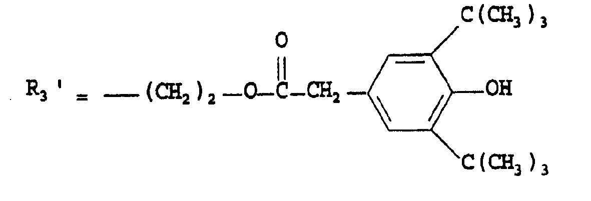 (kommerziell erhältlich unter dem Markennamen Irganox^{®} 3125; Ciba Specialty Chemicals).

Weitere bevorzugte sterisch gehinderten Phenole als mögliche Komponente (c) der erfindungsgemäßen Stabilisatormischungen sind solche, welche eine sterisch gehinderte Phenolgruppe der allgemeinen Formeln (I') oder (I'a) 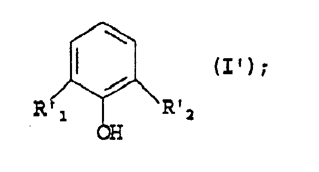 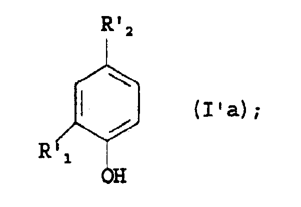 enthalten, wobei die Variablen R'₁ und R'₂ unabhängig voneinander die bereits zuvor gegebene Bedeutung besitzen.

Insbesondere sind hier Verbindungen der allgemeinen Formeln (II') und (II'a) 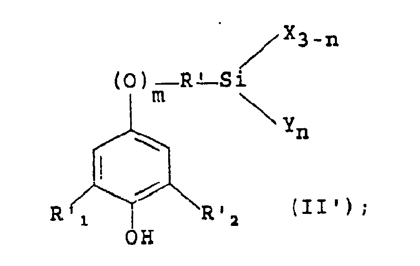 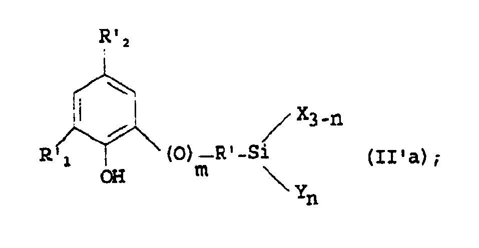 von Interesse. Verbindungen der Formeln (II') und (II'a) und Verbindungen, welche Gruppen der Formeln (I') und (I'a) enthalten, sind in den Schriften EP 162 523 A2 and EP 182 415 A2 beschrieben, auf welche hier ausdrücklich Bezug genommen wird. Die oben gezeigten Verbindungen können, aufgrund der hydrolysierbaren Silylreste, komplexe und hochviskose Hydrolyse- und/oder Kondensationsprodukte liefern.

Ein Beispiel für die oben genannten, silylgruppenhaltigen Verbindungen ist nachfolgend in der allgemeinen Formel (II") gezeigt:

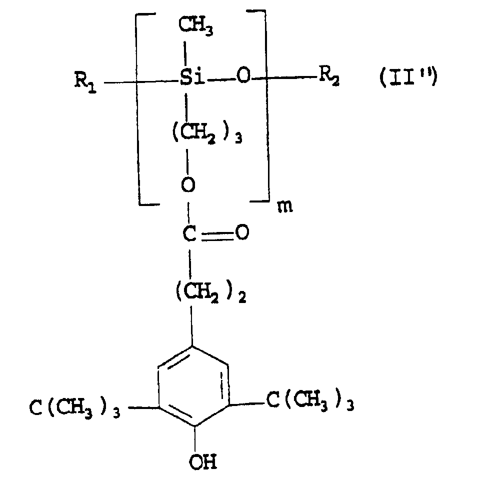

Die "Verbindung" besteht aus einer Mischung bestehend aus linearen Oligomeren, in welchen R₁ gleich Hydroxy und R₂ gleich Wasserstoff ist, und cyclischen Oligomeren, in welchen R₁ und R₂ jeweils eine chemische Einfachbindung bedeuten, mit einem mittleren Molgewicht von 3 900 g/mol.

Wie bereits oben erwähnt, sind die sterisch gehinderten Phenole als mögliche Komponente (c) bekannt und in einigen Fällen auch kommeriell erhältlich. Darüberhinaus können weitere dieser Verbindungen z.B. auch entsprechend der Schriften US 3,330,859, US 3,960,928, EP 162 523 A2 und EP 182 415 A2 hergestellt werden.

Als mögliche Komponente (d) können in den erfindungsgemäßen Stabilisatorzusammensetzungen sterisch gehinderte Amine enthalten sein. In diesen Verbindungen ist mindestens eine Gruppierung der allgemeinen Formeln (XXIII) oder (XXIV) 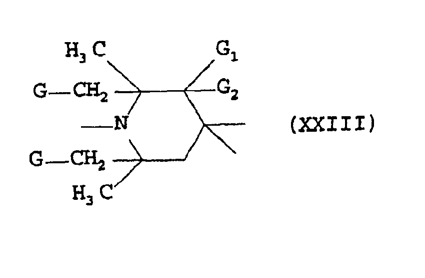 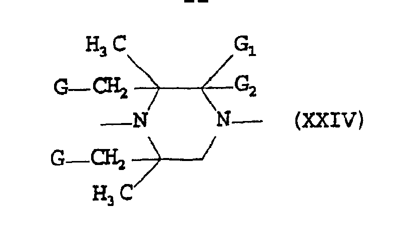 enthalten, worin bedeuten
- G: Wasserstoff; eine Methylgruppe;
- G₁ and G₂: unabhängig voneinander Wasserstoff; eine Methylgruppe; oder zusammen ein Sauerstoffatom.

Als mögliche Komponente (d) in den erfindungsgemäßen Stabilisatormischungen kommen sterisch gehinderte Amine in Frage, welche vorzugsweise ausgewählt sind aus den nachfolgend aufgeführten Gruppen (a') bis (h') von Verbindungen und welche mindestens über eine der zuvor genannten Gruppierungen der allgemeinen Formeln (XXIII) oder (XXIV) verfügen.

Gruppe (a'): Verbindungen der allgemeinen Formel (XXV): 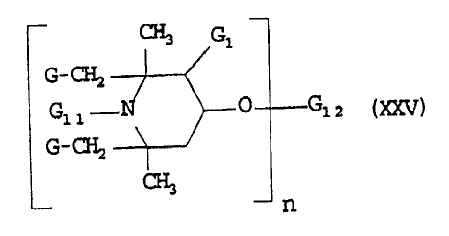 worin bedeuten
- n: eine ganze Zahl von 1 bis 4;
- G und G₁: unabhängig voneinander Wasserstoff oder eine Methylgruppe;
- G₁₁: Wasserstoff, Sauerstoff (N-G₁₁ bildet dann eine Nitroxylgruppe), Hydroxy, eine Gruppe NO (Nitrosogruppe), eine Gruppe -CH₂CN, C₁-C₁₈-Alkyl, C₃-C₈-Alkenyl, C₃-C₈-Alkinyl, C₇-C₁₂-Arylalkyl, C₁-C₁₈-Alkoxy, C₅-C₈-Cycloalkoxy, C₇-C₉-Phenylalkoxy, C₁-C₈-Alkanoyl, C₃-C₅-Alkenoyl, C₁-C₁₈-Alkanoyloxy, Benzyloxy, Glycidyl; eine Gruppe -CH₂CH(OH)-Z, in welcher Z Wasserstoff, Methyl oder Phenyl bedeutet; vorzugsweise Wasserstoff, C₁-C₄-Alkyl, Allyl, Benzyl, Acetyl oder Acryloyl;
- G₁₂: für n gleich 1 Wasserstoff, C₁-C₁₈-Alkyl, welches gegebenenfalls ein oder mehrere Sauerstoffatome enthält, Cyanoethyl, Benzyl, Glycidyl, ein einwertiger Rest einer aliphatischen, ungesättigten oder aromatischen cycloaliphatischen oder arylaliphatischen Carbonsäure, Carbamidsäure oder phosphorhaltigen Säure, oder ein einwertiger Silylrest, vorzugsweise ein Rest einer aliphatischen Carbonsäure mit 2 bis 18 Kohlenstoffatomen, einer cycloaliphatischen Carbonsäue mit 7 bis 15 Kohlenstoffatomen, einer α,β-ungesättigten Carbonsäure mit 3 bis 5 Kohlenstoffatomen, einer aromatischen Carbonsäure mit 7 bis 15 Kohlenstoffatomen, wobei diese Carbonsäuren gegebenenfalls im aliphatischen, cycloaliphatischen oder aromatischen Teil mit ein bis 3 Gruppen -COOZ₁₂ substituiert sind und Z₁₂ für Wasserstoff, C₁-C₂₀-Alkyl, C₃-C₁₂-Alkenyl, C₅-C₇-Cycloalkyl, Phenyl oder Benzyl steht;
für n gleich 2, C₂-C₁₂-Alkylen, C₄-C₁₂-Alkenylen, eine Xylylengruppe, ein zweiwertiger Rest einer aliphatischen, cycloaliphatischen, arylaliphatischen oder aromatischen Dicarbonsäure, Dicarbamidsäure oder phosphorhaltigen Säure, oder ein zweiwertiger Silylrest, vorzugsweise ein Rest einer aliphatischen Dicarbonsäure mit 2 bis 36 Kohlenstoffatomen, einer cycloaliphatischen oder aromatischen Dicarbonsäure mit 8 bis 14 Kohlenstoffatomen, einer aliphatischen, cycloaliphatischen oder aromatischen Dicarbamidsäure mit 8 bis 14 Kohlenstoffatomen, wobei diese Carbonsäuren gegebenenfalls im aliphatischen, cycloaliphatischen oder aromatischen Teil mit ein oder 2 Gruppen -COOZ₁₂ substituiert sind und Z₁₂ die zuvor gegebene Bedeutung besitzt;
für n gleich 3, ein dreiwertiger Rest einer aliphatischen, cycloaliphatischen oder aromatischen Tricarbonsäure, wobei diese Carbonsäure gegebenenfalls im aliphatischen, cycloaliphatischen oder aromatischen Teil mit einer Gruppe -COOZ₁₂ substituiert ist und Z₁₂ die zuvor gegebene Bedeutung besitzt, einer aromatischen Tricarbamidsäure, einer phosphorhaltigen Säure, oder ein dreiwertiger Silylrest; und
für n gleich 4 ein vierwertiger Rest einer aliphatischen, cycloaliphatischen oder aromatischen Tetracarbonsäure.

Beispiele von C₁-C₁₂-Alkylgruppen sind: Methyl, Ethyl, n-Propyl, n-Butyl, sec.-Butyl, tert.-Butyl, n-Hexyl, n-Octyl, 2-Ethylhexyl, n-Nonyl, n-Decyl, n-Undecyl und n-Dodecyl.

Beispiele von C₁-C₁₈-Alkylgruppen für G₁₁ and G₁₂ sind, in Ergänzung zu den bereits zuvor genannten Gruppen: n-Tridecyl, n-Tetradecyl, n-Hexadecyl und n-Octadecyl.

Beispiele von C₃-C₈-Alkenylgruppen für G₁₁ sind: 1-Propenyl, Allyl, Methallyl, 2-Butenyl, 2-Pentenyl, 2-Hexenyl, 2-Octenyl und 4-tert.-Butyl-2-butenyl.

Als C₃-C₈-Alkinylgruppe für G₁₁ kommt bevorzugt Propargyl in Betracht.

Als C₇-C₁₂-Arylalkylgruppe für G₁₁ kommt insbesondere Phenylethyl, bevorzugt Benzyl in Betracht.

Beispiele von C₁-C₈-Alkancylgruppen für G₁₁ sind: Formyl, Propionyl, Butyryl, Octanoyl, insbesondere Acetyl und, im Falle einer

C₃-C₅-Alkanoylgruppe, vorzugsweis Acryloyl.

Beispiele von einwertigen Carbonsäureresten für G₁₂ leiten sich von Essigsäure, Capronsäure (Hexansäure), Stearinsäure (Octadecansäure), Acrylsäure, Methacrylsäure, Benzoesäure und β-(3, 5-Di-tert.-butyl-4-hydroxyphenyl)propionsäure ab.

Beispiele von einwertigen Silylresten für G12 sind: ein Rest der allgemeinen Formel -(CⱼH₂ⱼ)-Si(Z')₂Z", worin j eine ganze Zahl von 2 bis 5 und Z' und Z" unabhängig voneinander eine C₁-C₄-Alkyl- oder C₁-C₄-Alkoxylgruppe bedeuten.

Beispiele von zweiwertigen Dicarbonsäureresten für G₁₂ leiten sich von Malonsäure, Bernsteinsäure, Glutarsäure, Adipinsäure, Suberinsäure (Korksäure, Octandisäure), Sebacinsäure, Maleinsäure, Itaconsäure (Methylenbernsteinsäure), Phthalsäure, Dibutylmalonsäure, Dibenzylmalonsäure, Butyl(3,5-di-tert.-butyl-4-hydroxybenzyl)malonsäure und Bicycloheptendicarbonsäure ab.

Beispiele von dreiwertigen Tricarbonsäureresten für G₁₂ leiten sich von Trimellitsäure, Zitronensäure und Nitrilotriessigsäure ab.

Beispiele von vierwertigen Tetracarbonsäureresten für G₁₂ leiten sich von Butan-1,2,3,4-tetracarbonsäure und Pyromellitsäure (1,2,4,5-Benzoltetracarbonsäure).

Beispiele von zweiwertigen Dicarbamidsäureresten für G₁₂ leiten sich von Hexamethylendicarbamidsäure und 2,4-Toluoldicarbamidsäure ab.

Bevorzugt sind Verbindungen der allgemeinen Formel (XXV), in welcher G Wasserstoff, G₁₁ Wasserstoff oder Methyl, G₁₂ ein Diacylrest einer aliphatischen Dicarbonsäure mit 4 bis 12 Kohlenstoffatomen und n gleich 2 bedeutet.

Beispiele von Polyalkylpiperidinen der allgemeinen Formel (XXV) sind insbesondere:
1) 4-Hydroxy-2,2,6,6-tetramethylpiperidin,
2) 1-Allyl-4-hydroxy-2,2,6,6-tetramethylpiperidin,
3) 1-Benzyl-4-hydroxy-2,2,6,6-tetramethylpiperidin,
4) 1-(4-tert.-Butyl-2-butenyl)-4-hydroxy-2,2,6,6-tetramethylpiperidin,
5) 4-Stearyloxy-2,2,6,6-tetramethylpiperidin,
6) 1-Ethyl-4-salicyloyloxy-2,2,6,6-tetramethylpiperidin,
7) 4-Methacryloyloxy-1,2,2,6,6-pentamethylpiperidin,
8) 1,2,2,6,6-Pentamethylpiperidin-4-yl-β-(3,5-di-tert.-butyl-4-hydroxyphenyl)propionat,
9) Bis(1-benzyl-2,2,6,6-tetramethylpiperidin-4-yl)maleat,
10) Bis(2,2,6,6-tetramethylpiperidin-4-yl)succinat,
11) Bis(2,2,6,6-tetramethylpiperidin-4-yl)glutarat,
12) Bis(2,2,6,6-tetramethylpiperidin-4-yl)adipat,
13) Bis(2,2,6,6-tetramethylpiperidin-4-yl)sebacat,
14) Bis(1,2,2,6,6-pentamethylpiperidin-4-yl)sebacat,
15) Bis(1,2,3,6-tetramethyl-2,6-diethylpiperidin-4-yl)sebacat,
16) Bis(1-allyl-2,2,6,6-tetramethylpiperidin-4-yl)phthalat,
17) 1-Hydroxy-d-β-cyancethyloxy-2,2,6,6-tetramethylpiperidin,
18) 1-Acetyl-2,2,6,6-tetramethylpiperidin-4-yl-acetate,
19) Tris(2,2,6,6-tetramethylpiperidin-4-yl)trimellitat,
20) 1-Acryloyl-4-benzyloxy-2,2,6,6-tetramethylpiperidin,
21) Bis(2,2,6,6-tetramethylpiperidin-4-yl)diethylmalonat,
22) Bis(1,2,2,6,6-pentamethylpiperidin-4-yl)dibutylmalonat,
23) Bis(1,2,2,6,6-pentamethylpiperidin-4-yl)-n-butyl-(3,5-di-tert.-butyl-4-hydroxybenzyl)malonat,
24) Bis(1-octyloxy-2,2,6,6-tetramethylpiperidin-4-yl)sebacat,
25) Bis(1-cyclohexyloxy-2,2,6,6-tetramethylpiperidin-4-yl)sebacat,
26) Hexan-1',6'-bis(4-carbamoyloxy-1-n-butyl-2,2,6,6-tetramethylpiperidin),
27) Toluol-2',4'-bis(4-carbamoyloxy-1-n-propyl-2,2,6,6-tetramethylpiperidin),
28) Dimethyl-bis(2,2,6,6-tetramethylpiperidin-4-oxy)silan,
29) Phenyl-tris(2,2,6,6-tetramethylpiperidin-4-oxy)silan,
30) Tris(1-propyl-2,2,6,6-tetramethylpiperidin-4-yl)phosphit,
31) Tris(1-propyl-2,2,6,6-tetramethylpiperidin-4-yl)phosphat,
32) Bis(1,2,2,6,6-pentamethylpiperidin-4-yl)phenylphosphonat,
33) 4-Hydroxy-1,2,2,6,6-pentamethylpiperidin,
34) 4-Hydroxy-N-hydroxyethyl-2,2,6,6-tetramethylpiperidin,
35) 4-Hydroxy-N-(2-hydroxypropyl)-2,2,6,6-tetramethylpiperidin,
36) 1-Glycidyl-4-hydroxy-2,2,6,6-tetramethylpiperidin,
37) 4-Benzoyl-2,2,6,6-tetramethylpiperidin,
38) Bin(1,2,2,6,6- pentamethylpiperidinyl)-2-n-butyl-2-(2-hydroxy-3,5-di-tert.-butylbenzyl)malonat,
39) Bis(1-octyloxy-2,2,6,6-tetramethylpiperidinyl)succinat.

Gruppe (b'): Verbindungen der allgemeinen Formel (XXVI) : 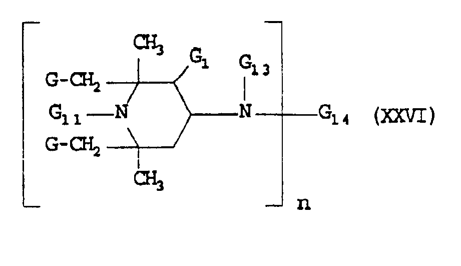 worin bedeuten
- n: 1 oder 2;
- G, G₁ und G₁₁: diesselbe Bedeutung wie unter Gruppe (a');
- G₁₃: Wasserstoff, C₁-C₁₂-Alkyl, C₂-C₅-Hydroxyalkyl, C₅-C₇-Cycloalkyl, C₇-C₈-Arylalkyl, Formyl, C₂-C₁₈-Alkanoyl, C₃-C₅-Alkenoyl, Benzoyl oder eine Gruppe der allgemeinen Formel 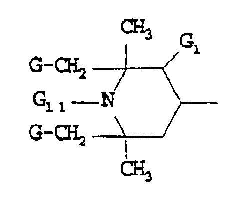
- G₁₄: für n gleich 1, Wasserstoff, C₁-C₁₅-Alkyl, C₃-C₈-Alkenyl, C₅-C₇-Cycloalkyl, mit Hydroxy, Cyano, Alkoxycarbonyl oder Carbamid substituiertes C₁-C₄-Alkyl, Glycidyl, eine Gruppe der Formel -CH₂-CH(OH)-Z oder der Formel -CONH-Z, worin Z Wasserstoff, Methyl oder Phenyl bedeutet, für den Fall, dass G₁₃
nicht Alkanoyl bedeutet, Alkenoyl oder Benzoyl, oder G₁₃ und G₁₄ bilden zusammen einen zweiwertigen Rest einer aliphatischen, cycloaliphatischen oder aromatischen 1,3-Dicarbonsäure;
für n gleich 2, C₂-C₁₂-Alkylen, C₆-C₁₂-Arylen, eine Xylylengruppe, eine Gruppe der Formel -CH₂-CH(OH)-CH₂- oder eine Gruppe der Formel -CH₂-CH(OH)-CH₂-O-D-O, worin D C₂-C₁₀-Alkylen, C₆-C₁₀-Arylen oder C₆-C₁₂-Cycloalkylen bedeutet; eine 1-Oxo-(C₂-C₁₂)-Alkylengruppe, ein zweiwertiger Rest einer aliphatischen, cycloaliphatischen oder aromatischen Dicarbon- oder Dicarbamidsäure, oder -CO-; oder G₁₃ und G₁₄ am 4-Stickstoffatom jeder der beiden Piperidinylreste bilden zusammen einen Rest der Formel

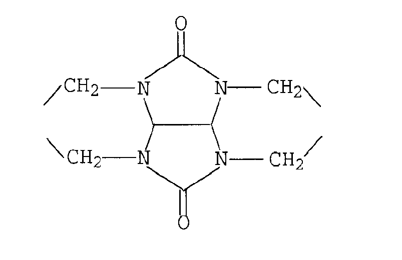

Mögliche C₁-C₁₂-Alkyl- oder C₁-C₁₈-Alkylgruppen wurden bereits unter Gruppe (a') exemplarisch beschrieben.

Als C₅-C₇-Cycloalkyl kommt vorzugsweise Cyclohexyl in Betracht.

Als Arylalkyl für G₁₃ kommt Phenylethyl, vorzugsweise Benzyl in Frage.

Als C₂-C₅-Hydroxyalkyl für G₁₃ kommen beispielsweise 2-Hydroxyethyl und 2-Hydroxypropyl in Betracht.

Beispiele von C₂-C₁₈-Alkanoyl für G₁₃ sind: Propionyl, Butyryl,

Octanoyl, Dodecanoyl, Hexadecanoyl und Octadecanoyl. Insbesondere sind zu erwähnen Acetyl und, für den Fall, dass G₁₃ C₃-C₅-Alkenoyl bedeutet, bevorzugt Acryloyl.

Beispiele von C₂-C₈-Alkenyl für G₁₄ sind: Allyl, Methallyl, 2-Butenyl, 2-Pentenyl, 2-Hexenyl und 2-Octenyl.

Beispiele von C₁-C₄-Alkyl, welches durch Hydroxy, Cyano, Alkoxycarbonyl oder Carbamid substituiert ist sind: 2-Hydroxyethyl, 2-Hydroxypropyl, 2-Cyanoethyl, Methoxycarbonylmethyl, 2-Ethoxycarbonylethyl, 2-Aminocarbonylpropyl und 2-(Dimethylaminocarbonyl)ethyl.

Beispiele für C₂-C₁₂-Alkylen sind: Ethylen, Propylen, 2,2-Dimethylpropylen, Tetramethylen, Hexamethylen, Octamethylen, Decamethylen und Dodecamethylen.

Beispiele für C₆-C₁₅-Arylen sind: o-, m- oder p-Phenylen, 1,4-Naphthylen und 4,4'-Diphenylen.

Als C₆-C₁₂-Cycloalkylen kommt insbesondere Cyclohexylen in Frage.

Bevorzugte Verbindungen der allgemeinen Formel (XXVI) sind solche, in welchen n gleich 1 oder 2 ist und G Wasserstoff, G₁₁ Wasserstoff oder Methyl, G₁₃ Wasserstoff, Formyl, C₁-C₁₂-Alkyl oder eine Gruppe der Formel 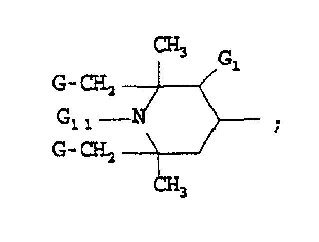 und
- G₁₄: für n gleich 1, Wasserstoff oder C₁-C₁₂-Alkyl und
für n gleich 2, C₂-C₈-Alkylen oder eine 1-Oxo-(C₂-C₈)-alkylengruppe
bedeutet.

Beispiele von Polyalkylpiperidinen der allgemeinen Formel (XXVI) sind insbesondere:
1) N,N'-Bis(2,2,6,6-tetramethylpiperidin-4-yl)hexamethylen-1,6-diamin,
2) N,N'-Bis(2,2,6,6-tetramethylpiperidin-4-yl)hexamethylen-1,6-diacetamid,
3) Bis(2,2,6,6-tetramethylpiperidin-4-yl)amin,
4) 4-Benzoylamino-2,2,6,6-tetramethylpiperidin,
5) N,N'-Bis(2,2,6,6-tetramethylpiperidin-4-yl)-N,N'-di-butyladipamid,
6) N,N'-Bis(2,2,6,6-tetramethylpiperidin-4-yl)-N,N'-di-cyclohexyl-2-hydroxypropylen-1,3-diamin,
7) N,N'-Bis(2,2,6,6-tetramethylpiperidin-4-yl)-p-xylylendiamin,
8) N,N'-Bis(2,2,6,6-tetramethylpiperidin-4-yl)succinamid,
9) Bis(2,2,6,6-tetramethylpiperidin-4-yl)-N-(2,2,6,6-tetramethylpiperidin-4-yl)-β-aminodipropionat,
10) eine Verbindung der Formel: 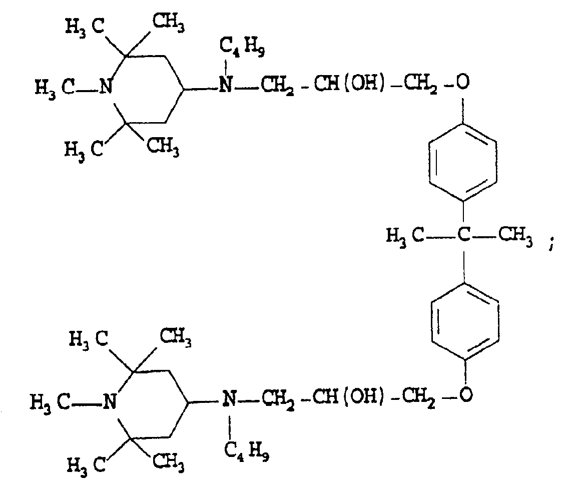
11) 4-[Bis(2-hydroxyethyl)amino]-1,2,2,6,6-pentamethylpiperidin,
12) 4-(3-Methyl-4-hydroxy-5-tert.-butylbenzamido)-2,2,6,6-tetramethylpiperidin,
13) 4-Methacrylamido-1,2,2,6,6-pentamethylpiperidin,
14) N,N'-Bisformyl-bis(2,2,6,6-tetramethylpiperidin-4-yl)hexamethylen-1,6-diamin (kommerziell erhältlich unter dem Markennamen Uvinul® 4050 H; BASF Aktiengesellschaft),
15) N,N'-Bisformyl-bis(1,2,2,6,6-pentamethylpiperidin-4-yl)hexamethylen-1,6-diamin,
16) eine Verbindung der Formel 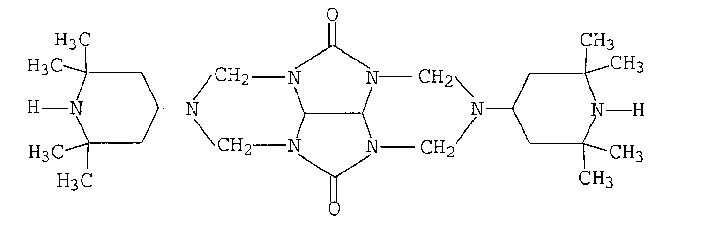 (kommerziell erhältlich unter dem Markennamen Uvinul® 4049 H; BASF Aktiengesellschaft),
17) eine Verbindung der Formel

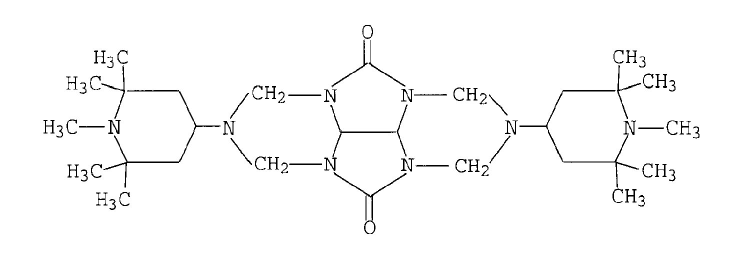

Gruppe (c'): Verbindungen der allgemeinen Formel (XXVII): 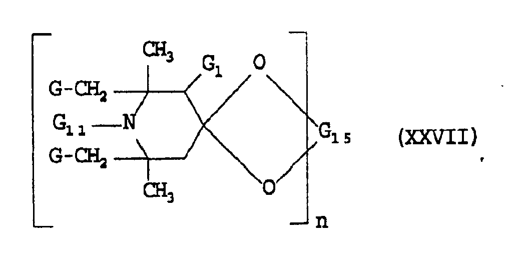 worin bedeuten
- n: 1 oder 2;
- G, G₁ und G₁₁: diesselbe Bedeutung wie unter Gruppe (a');
- G₁₅: für n gleich 1, C₂-C₈-Alkylen, C₂-C₈-Hydroxyalkylen oder C₄-C₂₂-Acyloxyalkylen und
für n gleich 2, eine Gruppe (CH₂)₂C(CH₂-)₂.

Beispiele von C₂-C₈-Alkylen oder C₂-C₈-Hydroxyalkylen für G₁₅ sind: Ethylen, 1-Methylethylen, Propylen, 2-Ethylpropylen und 2-Ethyl-2-hydroxymethylpropylen.

Als Beispiel von C₄-C₂₂-Acyloxyalkylen für G₁₅ sei 2-Ethyl-2-acetoxymethylpropylen genannt.

Beispiele von Polyalkylpiperidinen der allgemeinen Formel (XXVII) sind insbesondere:
1) 9-Aza-8,8,10,10-tetramethyl-1,5-dioxaspiro[5.5]undecan,
2) 9-Aza-8,8,10,10-tetramethyl-3-ethyl-1,5-dioxaspiro[5.5]undecan,
3) 8-Aza-2,7,7,8,9,9-hexamethyl-1,4-dioxaspiro[4.5]decan,
4) 9-Aza-3-hydroxymethyl-3-ethyl-8,8,9,10,10-pentamethyl-1,5-dioxaspiro[5.5]undecan,
5) 9-Aza-3-ethyl-3-acetoxymethyl-9-acetyl-8,8,10,10-tetramethyl-1,5-dioxaspiro[5.5]undecan,
6) 2,2,6,6-Tetramethylpiperidin-4-spiro-2'-(1',3'-dioxan)-5'-spiro-5"-(1",3"-dioxan)-2"-spiro-4"'-(2"', 2"', 6"', 6"'-tetramethylpiperidin).

Gruppe (d'): Verbindungen der allgemeinen Formeln (XXVIIIA), (XXVIIIB) und vorzugsweise (XXVIIIC): 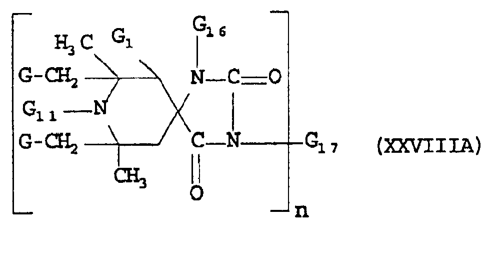 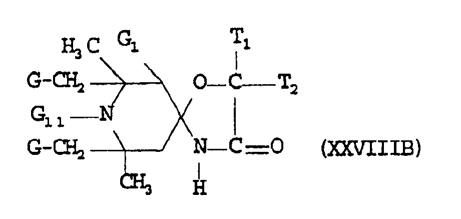 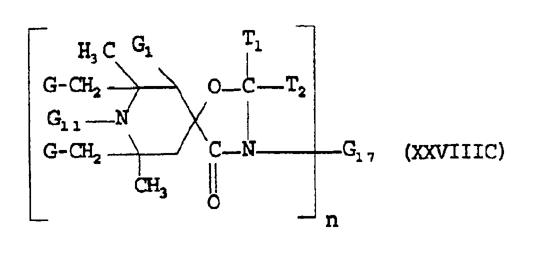 worin bedeuten
- n: 1 oder 2;
- G, G₁ und G₁₁: diesselbe Bedeutung wie unter Gruppe (a');
- G₁₆: Wasserstoff, C₁-C₁₂-Alkyl, Allyl, Benzyl, Glycidyl oder C₂-C₆-Alkoxyalkyl;
- G₁₇: für n gleich 1, Wasserstoff, C₁-C₁₂-Alkyl, C₃-C₅-Alkenyl, C₇-C₉-Arylalkyl , C₅-C₇-Cycloalkyl, C₂-C₄-Hydroxyalkyl, C₂-C₆-Alkoxyalkyl, C₆-C₁₀-Aryl, Glycidyl oder eine Gruppe der Formel -(CH₂)_{P}-COO-Q oder -(CH₂)ₚ-O-CO-Q, worin p gleich 1 oder 2 ist und Q C₁-C₄-Alkyl oder Phenyl bedeutet, und
für n gleich 2, C₂-C₁₂-Alkylen, C₄-C₁₂-Alkenylen, C₆-C₁₂-Arylen, eine Gruppe der Formel:

-CH₂-CH(OH)-CH₂-O-D-O-CH₂-CH(OH)-CH₂-,

worin D C₂-C₁₀-Alkylen, C₆-C₁₅-Arylen, C₆-C₁₂-Cycloalkylen bedeutet, oder eine Gruppe der Formel:

-CH₂CH(OZ')CH₂-OCH₂-CH(OZ')CH₂-OCH₂-CH(OZ')CH₂-

worin Z' Wasserstoff, C₁-C₁₈-Alkyl, Allyl, Benzyl, C₂-C₁₂-Alkanoyl oder Benzoyl bedeutet;
T₁ und T₁ unabhängig voneinander Wasserstoff, gegebenenfalls mit Halogen oder C₁-C₄-Alkyl substituiertes C₁-C₁₆-Alkyl, gegebenenfalls mit Halogen oder C₁-C₄-Alkyl substituiertes C₆-C₁₀-Aryl, gegebenenfalls mit Halogen oder C₁-C₄-Alkyl substituiertes C₇-C₉-Arylalkyl; oder T₁ and T₂ bilden zusammen mit dem Kohlenstoffatom, an welches sie gebunden sind, einen C₅-C₁₄-Cycloalkanring.

Beispiele von C₁-C₁₂-Alkyl sind: Methyl, Ethyl, n-Propyl, n-Butyl, sec.-Butyl, tert.-Butyl, n-Hexyl, n-Octyl, 2-Ethylhexyl, n-Nonyl, n-Decyl, n-Undecyl und n-Dodecyl.

Beispiele von C₁-C₁₈-Alkyl, in Ergänzung zu den bereits zuvor exemplarisch aufgeführten C₁-C₁₂-Alkylresten: n-Tridecyl, n-Tetradecyl, n-Hexadecyl und n-Octadecyl.

Beispiele von C₂-C₆-Alkoxyalkyl sind: Methoxymethyl, Ethoxymethyl, Propoxymethyl, tert.-Butoxymethyl, Ethoxyethyl, Ethoxypropyl, n-Butoxyethyl, tert.-Butoxyethyl, Isopropoxyethyl und Propoxypropyl.

Beispiele von C₃-C₅-Alkenyl für G₁₇ sind: 1-Propenyl, Allyl, Methallyl, 2-Butenyl und 2-Pentenyl.

Beispiele von C₇-C₉-Arylalkyl für G₁₇, T₁ und T₂ sind: Phenylethyl, vorzugsweise Benzyl.

Beispiele für den Fall, dass T₁ und T₂ mit dem Kohlenstoffatom, an welches sie gebunden sind, Cycloalkanringe bilden sind: Cyclopentan, Cyclohexan, Cyclooctan und Cyclododecan.

Beispiele von C₂-C₄-Hydroxyalkyl für G₁₇ sind: 2-Hydroxyethyl, 2-Hydroxypropyl, 2-Hydroxybutyl und 4-Hydroxybutyl.

Beispiele von C₆-C₁₀-Aryl für G₁₇, T₁ und T₂ sind: gegebenenfalls mit Halogen oder C₁-C₄-Alkyl substituiertes Phenyl und gegebenenfalls mit Halogen oder C₁-C₄-Alkyl substituiertes α- oder β-Naphthyl.

Beispiele von C₂-C₁₂-Alkylen für G₁₇ sind: Ethylen, Propylen, 2,2-Dimethylpropylen, Tetramethylen, Hexamethylen, Octamethylen,

Decamethylen und Dodecamethylene.

Beispiele von C₄-C₁₂-Alkenylen für G₁₇ sind: 2-Butenylen, 2-Pentenylen und 3-Hexenylen.

Beispiele von C₆-C₁₂-Arylen für G₁₇ sind: o-, m- und p-Phenylen, 1,4-Naphthylen und 4,4'-Diphenylen.

Beispiele von C₂-C₁₂-Alkanoyl für Z sind: Propionyl, Butyryl, Octanoyl und Dodecanoyl, vorzugsweie Acetyl.

Beispiele von C₂-C₁₀-Alkylen, C₆-C₁₅-Arylen und C₆-C₁₂-Cycloalkylen für D sind unter Gruppe (b') beschrieben.

Beispiele von Polyalkylpiperidinen der allgemeinen Formeln (XXVIIIA), (XXVIIIB) und (XXVIIIC) sind insbesondere:
1) 3-Benzyl-1,3,8-triaza-7,7,9,9-tetramethylspiro[4.5]decan-2,4-dion,
2) 3-n-Octyl-1,3,8-triaza-7,7,9,9-tetramethylspiro[4.5]decan-2,4-dion,
3) 3-Allyl-1,3,8-triaza-1,7,7,9,9-pentamethylspiro[4.5]decan-2,4-dion,
4) 3-Glycidyl-1,3,8-triaza-7,7,8,9,9-pentamethylspiro[4.5]decan-2,4-dion,
5) 1,3,7,7,8,9,9-Heptamethyl-1,3,8-triazaspiro[4.5]decan-2,4-dion,
6) 2-Isopropyl-7,7,9,9-tetramethyl-1-oxa-3,8-diaza-4-oxospiro[4.5]decan,
7) 2-Undecyl-7,7,9,9-tetramethyl-1-oxa-3,8-diaza-4-oxospiro[4.5]decan,
8) 2,2-Dibutyl-7,7,9,9-tetramethyl-1-oxa-3,8-diaza-4-oxospiro[4.5]decan,
9) 2,2,4,4-Tetramethyl-7-oxa-3,20-diaza-21-oxodispiro-[5.1.11.2]heneicosan,
10) 2-Butyl-7,7,9,9-tetramethyl-1-oxa-4,8-diaza-3-oxospiro[4.5]decan, und vorzugsweise
11) 8-Acetyl-3-dodecyl-1,3,8-triaza-7,7,9,9-tetramethylspiro-[4.5]decan-2,4-dion,
und Verbindungen der nachfolgenden Formeln:

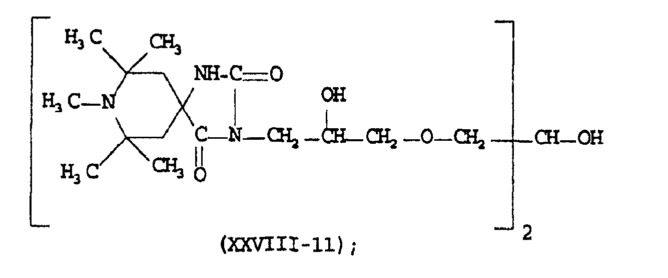

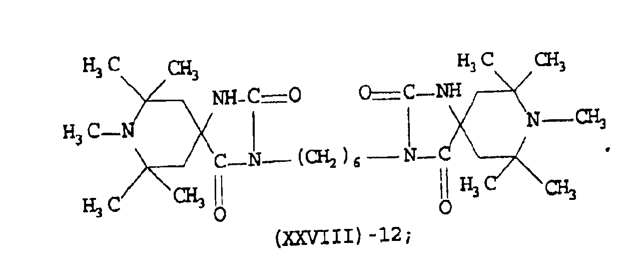

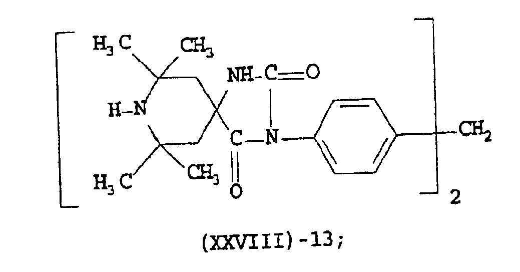

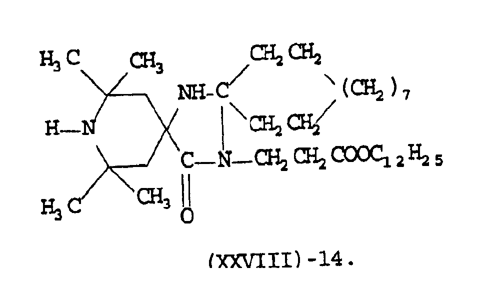

Gruppe (e'): Verbindungen der allgemeinen Formel (XXIX): 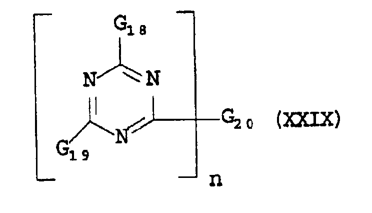 worin bedeuten
- n: 1 oder 2;
- G₁₈: eine Gruppe der Formel: 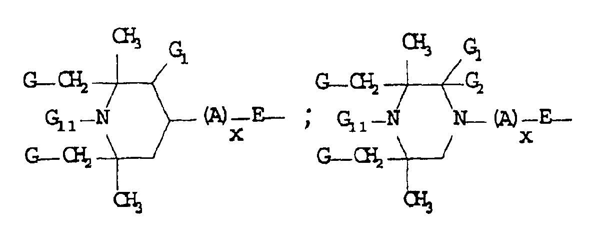 worin G und G₁₁ diesselbe Bedeutung wie unter Gruppe (a') besitzt;
G₁ und G₂ unabhängig voneinander Wasserstoff oder Methyl, oder zusammen mit dem Kohlenstoffatom, an welches sie gebunden sind eine Carbonylgruppe;
E Sauerstoff oder eine Gruppe -NG₁₃-;
A C₂-C₆-Alkylen oder eine Gruppe -(CH₂)₃-O-;
x gleich 0 oder 1;
G₁₃ Wasserstoff, C₁-C₁₂-Alkyl, C₂-C₅-Hydroxyalkyl, C₅-C₇-Cycloalkyl;
G₁₉ diesselbe Bedeutung wie G₁₈ oder eine der nachfolgenden Gruppen: -NG₂₁G₂₂, -OG₂₃, -NHCH₂OG₂₃ oder -N(CH₂OG₂₃)₂;
G₂₀ für n gleich 1, diesselbe Bedeutung wie G₁₈ oder G₁₉,
für n gleich 2, eine Gruppe -E-B-E-, worin B gegebenenfalls durch ein oder zwei -N(G₂₁)-Gruppen unterbrochenes C₂-C₈-Alkylene bedeutet;
G₂₁ C₁-C₁₂-Alkyl, Cyclohexyl, Benzyl, C₁-C₄-Hydroxyalkyl, eine Gruppe der nachfolgenden Formel: 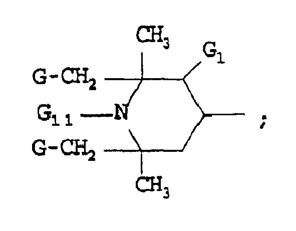 oder eine Gruppe der nachfolgenden Formel: 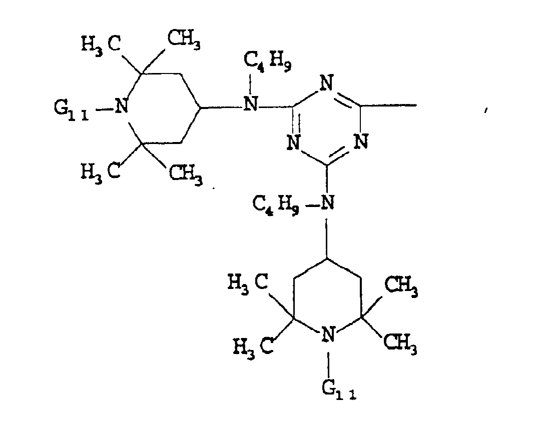 G₂₂ C₁-C₁₂-Alkyl, Cyclohexyl, Benzyl, C₁-C₄-Hydroxyalkyl;
oder G₂₁ und G₂₂ in der Gruppe -NG₂₁G₂₂ bilden zusammen eine C₄-C₅-Alkylen- oder C₄-C₅-Oxyalkylengruppe, oder eine Gruppe der Formel: 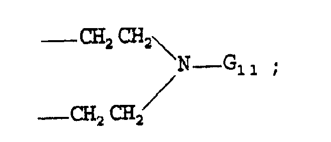 G₂₃ Wasserstoff, C₁-C₁₂-Alkyl, Phenyl.

Beispiele für C₁-C₁₂-Alkyl sind: Methyl, Ethyl, n-Propyl, n-Butyl, sec.-Butyl, tert.-Butyl, n-Hexyl, n-Octyl, 2-Ethylhexyl, n-Nonyl, n-Decyl, n-Undecyl und n-Dodecyl.

Beispiele für C₁-C₄-Hydroxyalkyl sind: 2-Hydroxyethyl, 2-Hydroxypropyl, 3-Hydroxypropyl, 2-Hydroxybutyl und 4-Hydroxybutyl.

Beispiele von C₂-C₆-Alkylen für A sind: Ethylen, Propylen, 2,2-Dimethylpropylen, Tetramethylen und Hexamethylen.

Für den Fall, dass G₂₁ und G₂₂ zusammen C₄-C₅-Alkylen oder C₄-C₅-Oxyalkylen bilden, sind zu nennen: Tetramethylen, Pentamethylen und 3-Oxapentamethylen.

Beispiele von Polyalkylpiperidinen der allgemeinen Formel (XXIX) sind insbesondere:

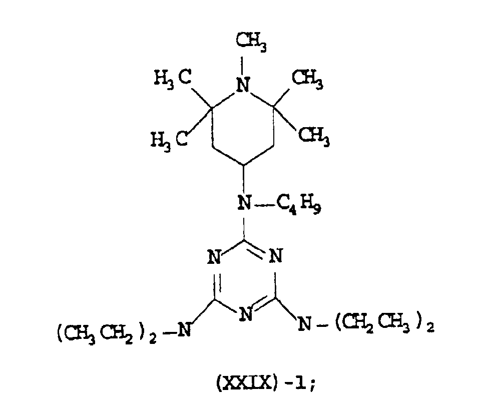

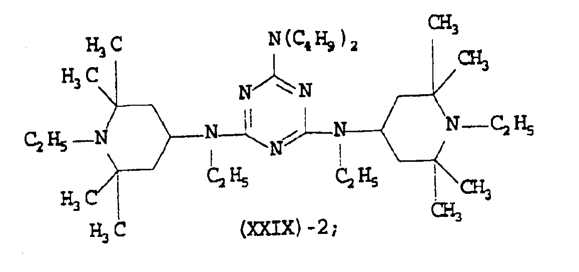

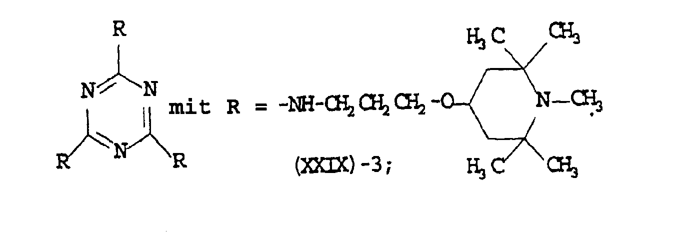

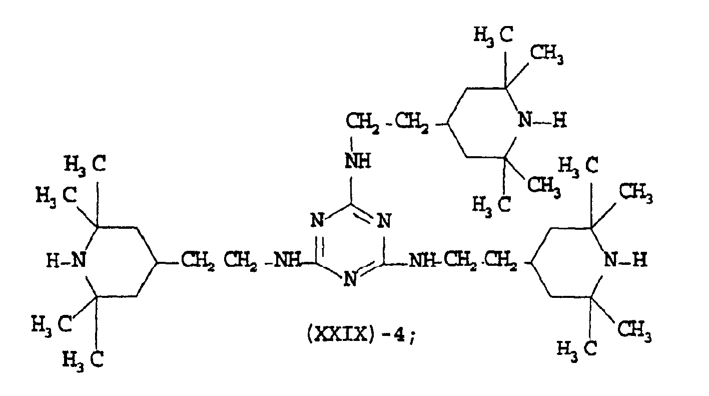

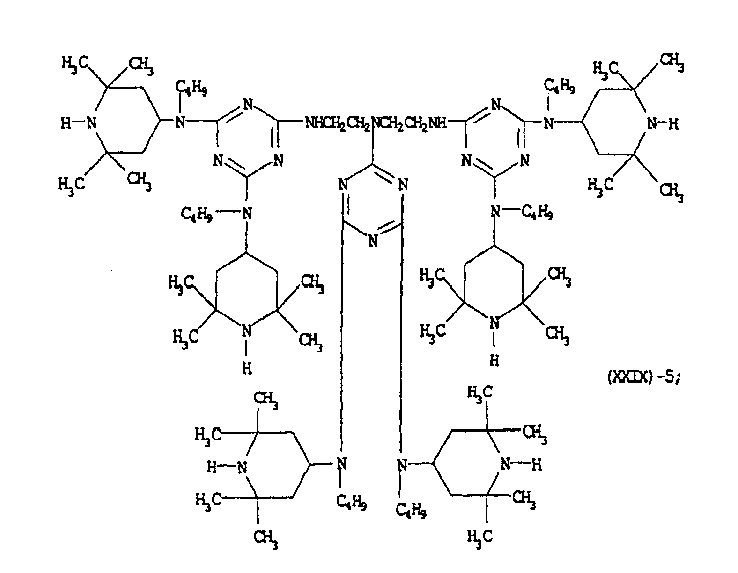

R-NH-(CH₂)₃-N(R)-(CH₂)₂-N(R)-(CH₂)₃-NH-R (XXIX)-6,

worin R bedeutet 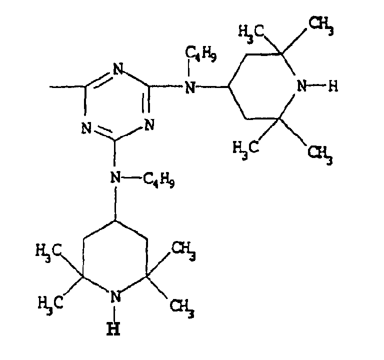 R-NH-(CH₂)₃-N(R)-(CH₂)₂-N(R)-(CH₂)₃-NH-R (XXIX)-7,

worin R bedeutet

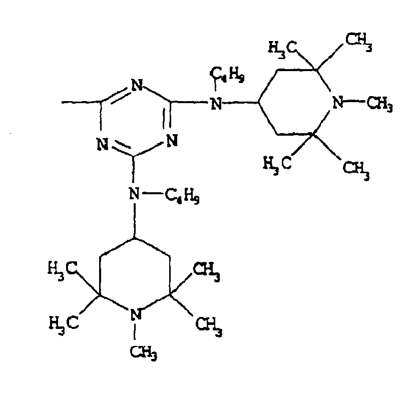

R-N(CH₃)-(CH₂)₃-N(R)-(CH₂)₂-N(R)-(CH₂)₃-N(CH₃)-R (XXIX)-8,

worin R bedeutet

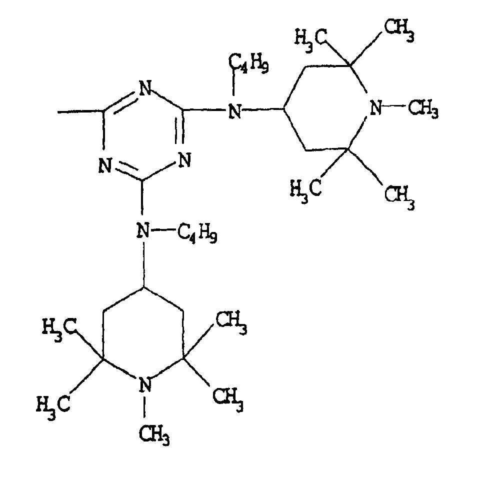

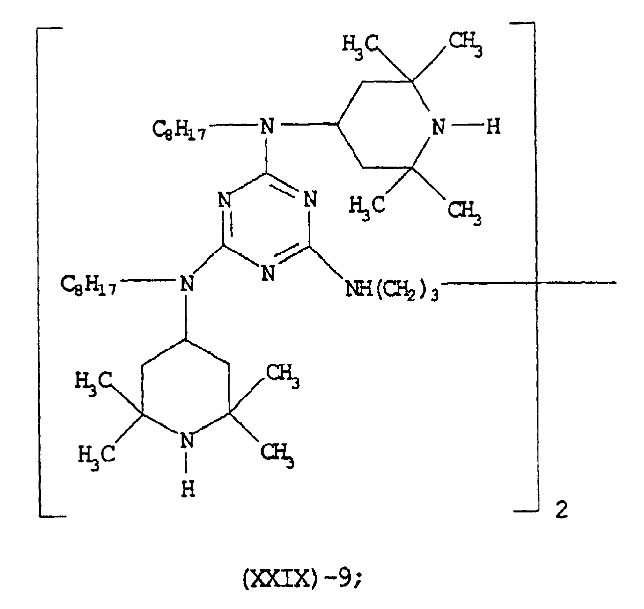

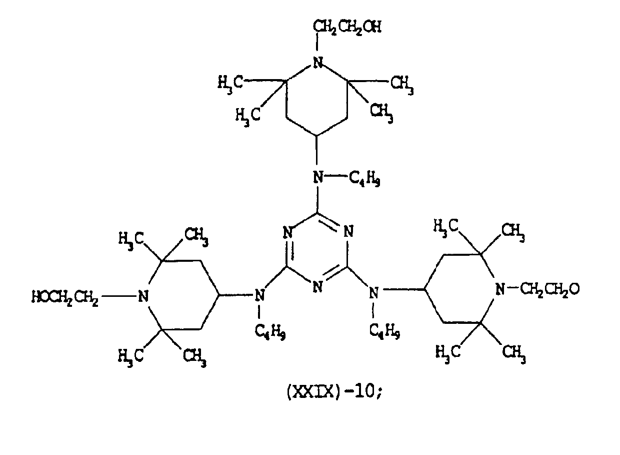

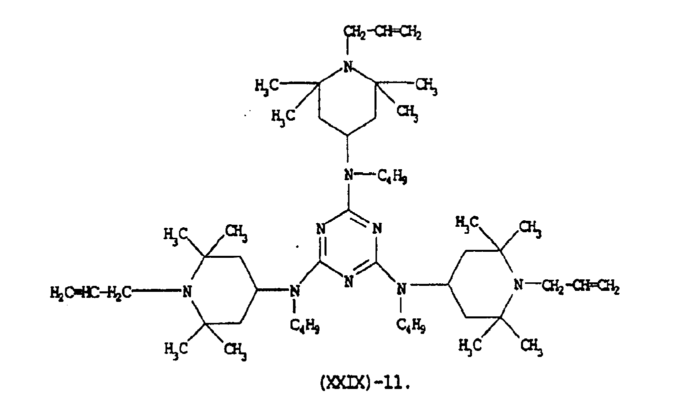

Gruppe (f'): Oligomere oder polymere Verbindungen, deren Wiederholungseinheiten 2,2,6,6-Tetramethylpiperidin-Reste enthalten, insbesondere Polyester, Polyether, Polyamide, Polyamine, Polyurethane, Polyharnstoffe, Polyaminotriazine, Poly(meth)acrylate und Poly(meth)acrylamide, sowie deren Copolymere

Beispiele von solchen 2,2,6,6-Polyalkylpiperidinen werden durch nachfolgende Formeln wiedergegeben, wobei m eine Zahl von 2 bis 200 bedeutet: 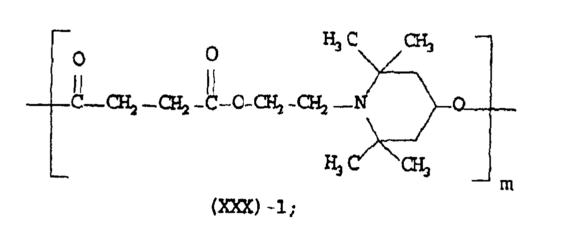 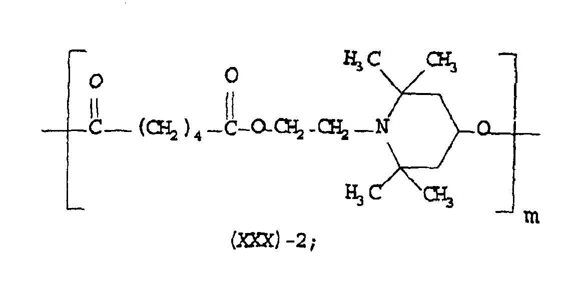 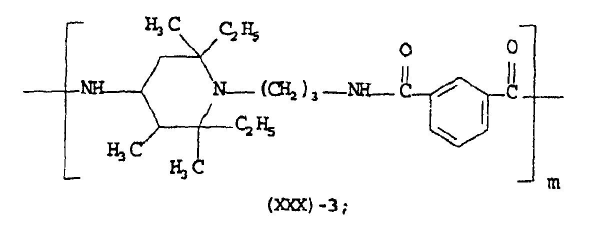 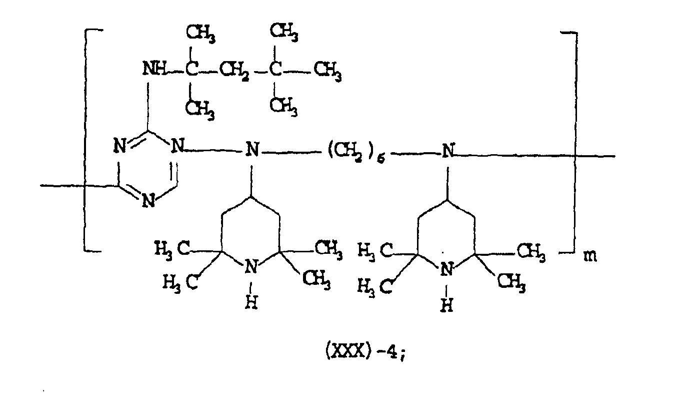 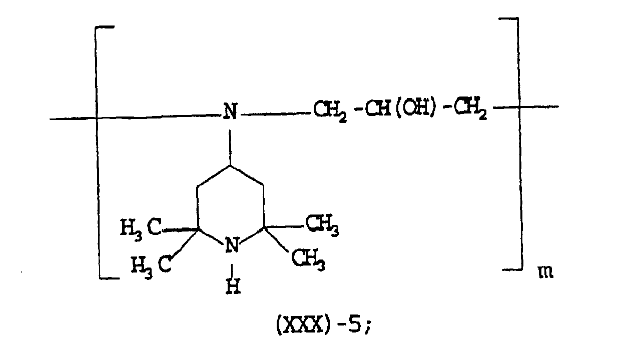 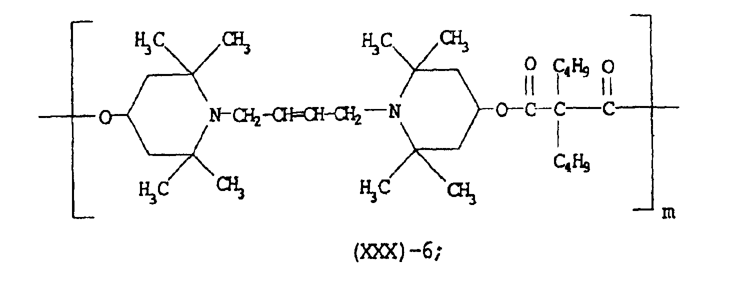 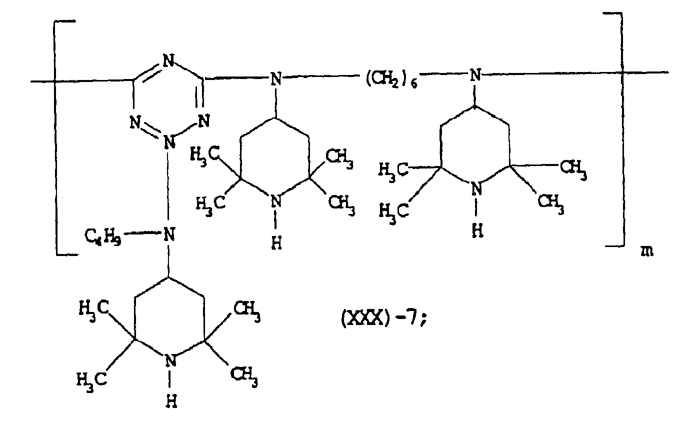 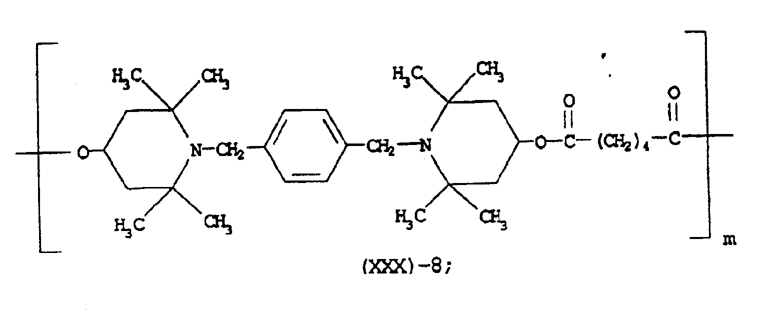 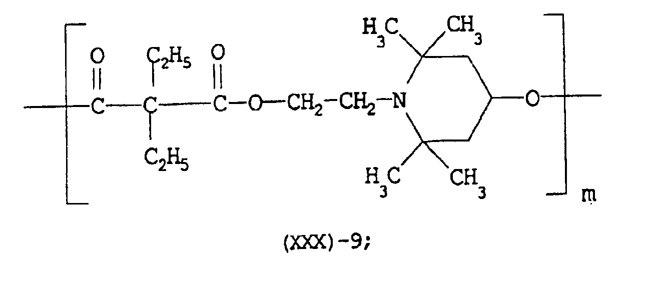 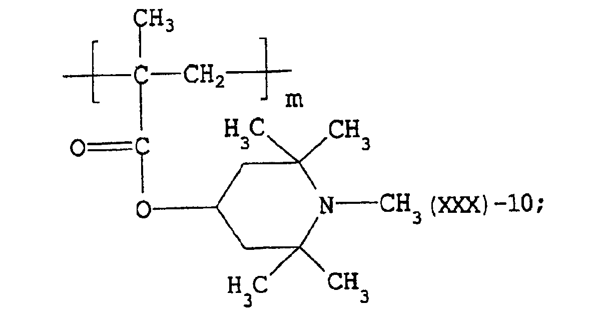 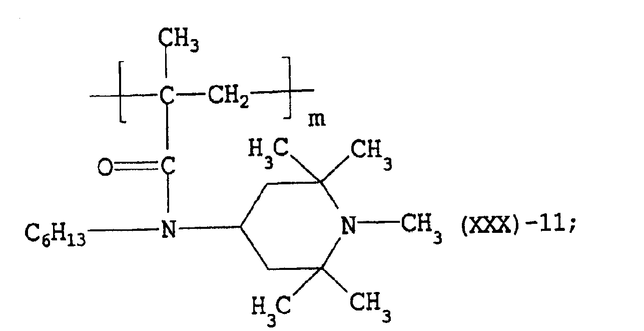 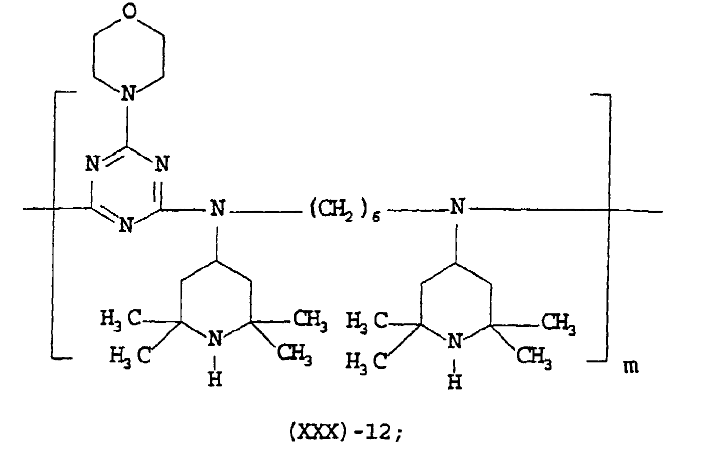 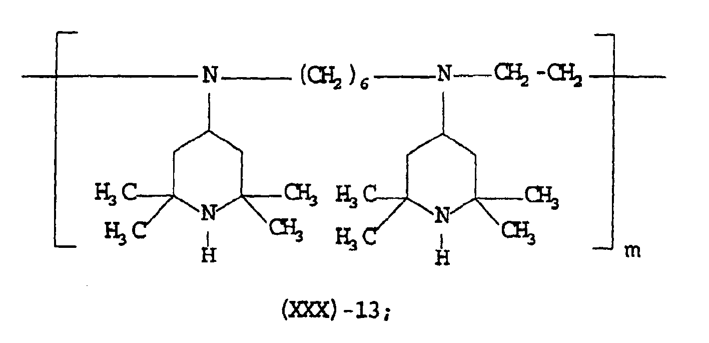 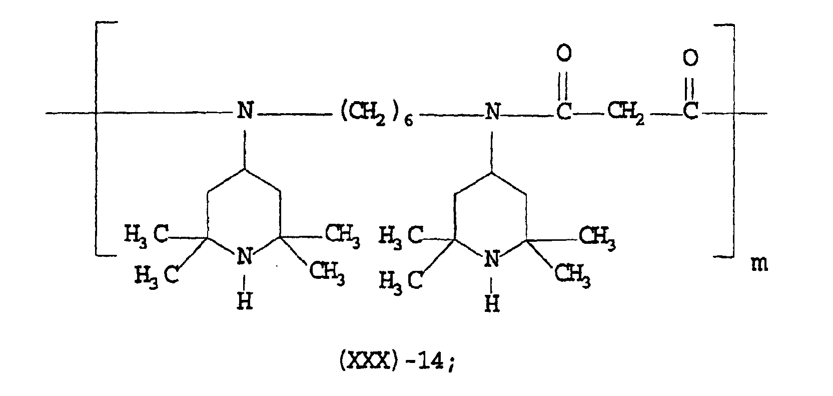 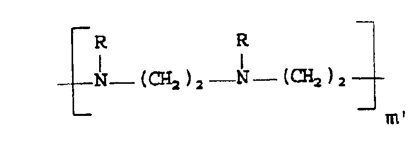 worin R einen Rest 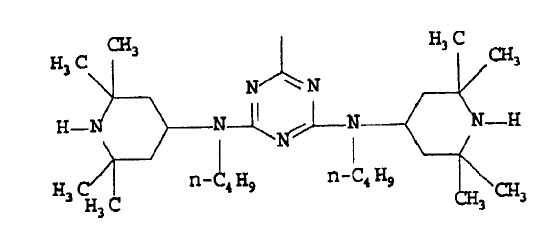 oder 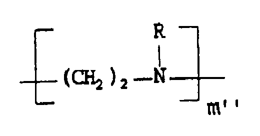 bedeutet und m' und m" jeweils eine ganze Zahlen von 0 bis 200, mit der Maßgabe, dass m' + m" = m gilt.

Weitere Beispiele von polymeren Verbindungen der Gruppe (f') sind:
- die Reaktionsprodukte von Verbindungen der Formel (XXXI) 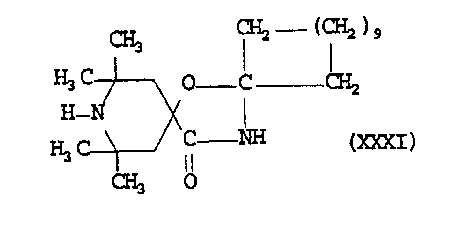 mit Epichlorohydrin,
- Polyester, welche durch Umsetzung von Butan-1,2,3,4-tetracarbonsäure mit zweiwertigen Alkoholen der Formel (XXXII): 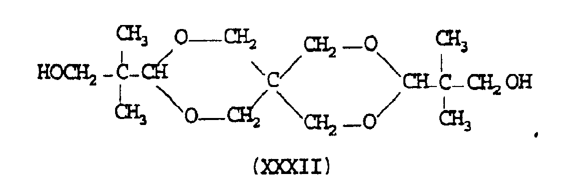 erhalten werden und deren von der Tetracarbonsäure herrührende Carboxylterminierung mit 2,2,6,6-Tetramethyl-4-hydroxypiperidin verestert ist,
- Verbindungen der allgemeinen Formel (XXXIII): 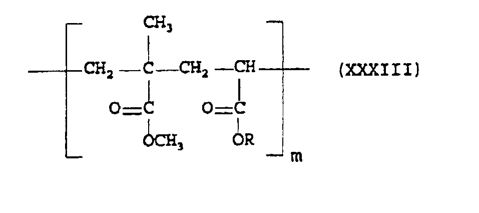
worin etwa ein Drittel der Reste R Ethyl und der übrige Anteil der Reste R einen Rest der Formel 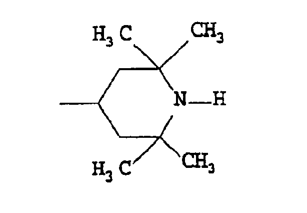 bedeuten und m eine Zahl von 2 bis 200 ist,
- Copolymere, deren Wiederholungseinheiten einerseits aus α-Methylstyrol 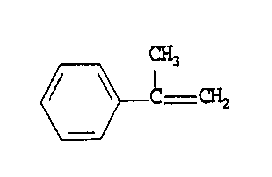 und andererseits aus Maleimid-Derivaten der Formeln 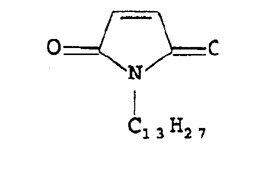 und 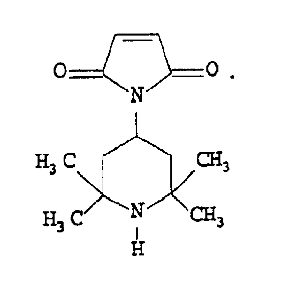 bestehen,
- Copolymere, deren Wiederholungseinheiten einerseits aus α-C₁₈-C₂₈-Olefinen oder Gemischen solcher Olefine und andererseits aus Maleimid-Derivaten der Formel 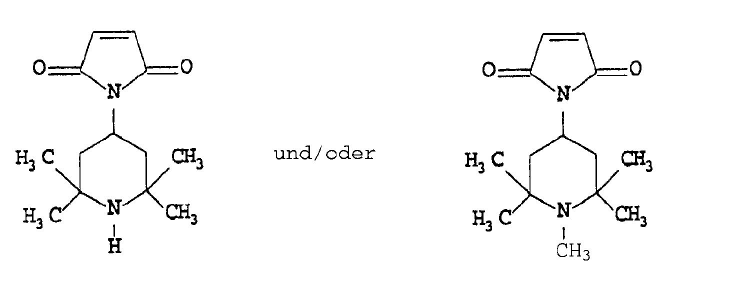 bestehen. Beispielsweise ist hier das kommerziell verfügbare Produkt Uvinul^{®} 5050 H (nur Wasserstoff am 1-Stickstoff des Piperidinringes; BASF Aktiengesellschaft) zu nennen.

Gruppe (g'): Verbindungen der allgemeinen Formel (XXXIV): 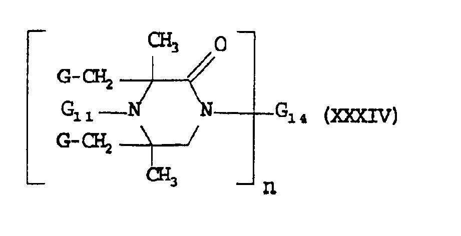 worin bedeuten
- n: 1 oder 2;
- G und G₁₁: diesselbe Bedeutung wie unter Gruppe (a') und
- G₁₄: diesselbe Bedeutung wie unter Gruppe (b'), wobei G₁₄ weder eine Gruppe -CONH-Z noch eine Gruppe -CH₂CH(OH)-CH₂-O-D-O darstellt.

Beispiele für Verbindungen der allgemeinen Formel (XXXIV) sind:

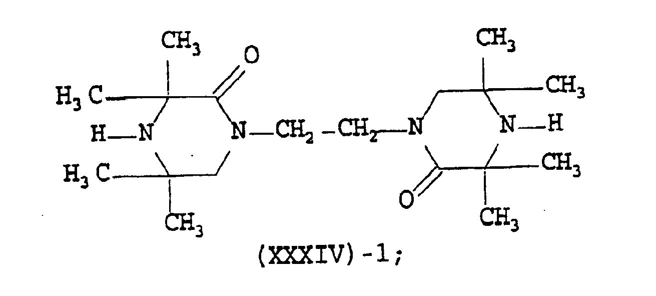

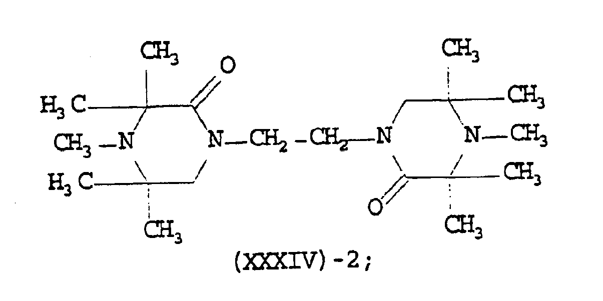

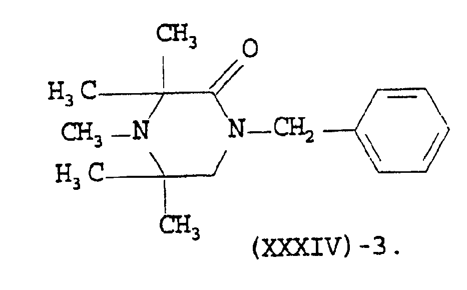

Gruppe (h'): Verbindungen der allgemeinen Formel (XXXV): 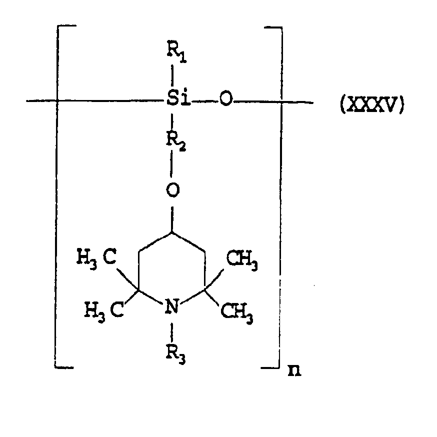 worin bedeuten:
- R₁: C₁-C₁₀-Alkyl, gegebenenfalls mit C₁-C₄-Alkyl substituiertes C₅-C₁₂-Cycloalkyl, gegebenenfalls mit C₁-C₁₀-Alkyl substituiertes Phenyl;
- R₂: C₃-C₁₀-Alkylene;
- R₃: Wasserstoff, C₁-C₈-Alkyl, O·, -CH₂CN, C₃-C₆-Alkenyl, gegebenenfalls am Phenylrest mit C₁-C₄-Alkyl substituiertes C₇-C₉-Phenylalkyl, C₁-C₈-Acyl, -OR'₃ group, worin R'₃ Wasserstoff oder C₁-C₁₀-Alkyl bedeutet, und
- n: eine Zahl von 1 bis 50

Im Sinne der vorliegenden Erfindung sind insbesondere Verbindungen von Bedeutung, welche zur Gruppe (d) der sterisch gehinderten Amine gehören und ausgewählt sind aus: Uvinul^{®} 4049 H (Fa. BASF Aktiengesellschaft), Uvinul^{®} 4050 H (Fa. BASF Aktiengesellschaft), Uvinul^{®} 5050 H (Fa. BASF Aktiengesellschaft), Tinuvin^{®}123 (Fa. Ciba Specialty Chemicals), Tinuvin^{®} 144 (Fa. Ciba Specialty Chemicals), Lowilite^{®} 76 (Fa. Great Lakes Chemical Corporation), Lowilite^{®} 62 (Fa. Great Lakes Chemical Corporation), Lowilite^{®} 94 (Fa. Great Lakes Chemical Corporation), Chimassorb^{®} 119 (Fa. Ciba Specialty Chemicals), Cysorb^{®} UV 3529 (Fa. Cytec), Cyasorb^{®} UV 3346 (Fa. Cytec), die Verbindung der Formel (XXXV)-1: 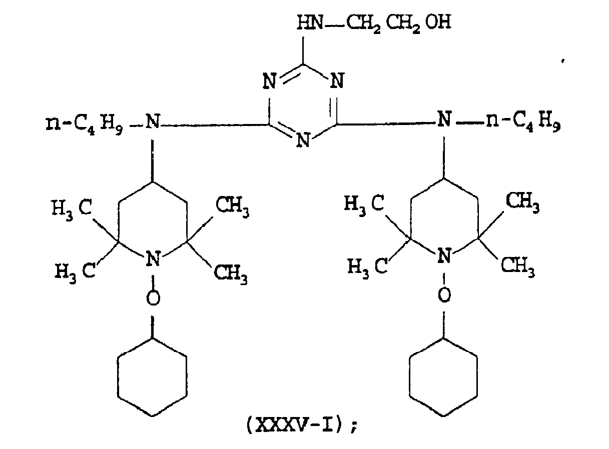 poly-methylpropyl-3-oxy-[4-(2,2,6,6-tetramethyl)piperidinyl]siloxan, kommerziell erhältlich unter dem Markennamen UVASIL^{®} 299 (Fa. Great Lakes Chemical Corporation), Poly-methylpropyl-3-oxy-[4-(1,2,2,6,6-pentamethyl)piperidinyl]siloxan.

Die Verbindungen der Gruppe (d) der sterisch gehinderten Amine, welche erfindungsgemäß Verwendung finden, besitzen ein mittleres Molgewicht Mₙ von 500 bis 10 000, insbesondere von 1 000 bis 10 000.

Als mögliche Komponente (e) kann in den Stabilisatormischungen mindestens eine Verbindung ausgewählt aus der Gruppe der Chromane enthalten sein. Bevorzugt entsprechen diese Verbindungen der Formel (XXV) 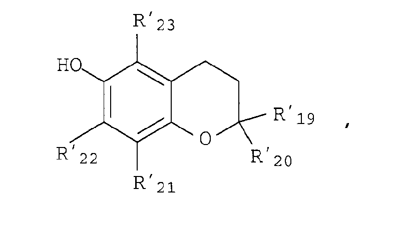 worin
- R'₁₉: Wasserstoff; C₁-C₂₄-Alkyl; C₃-C₁₂-Cycloalkyl; ein- oder mehrfach ungesättigtes C₂-C₂₄-Alkenyl; und
- R'₂₀, R'₂₁, R'₂₂ und R'₂₃: unabhängig voneinander Wasserstoff; C₁-C₂₄-Alkyl; C₃-C₁₂-Cycloalkyl; ein- oder mehrfach ungesättigtes C₂-C₂₄-Alkenyl; Carboxylgruppen COOR'₁₉; Succinylgruppen -CH(COOR'₁₉)-CH₂-COOR'₁₉
bedeuten. Mögliche C₁₋₂₄-Alkyl-, C₃₋₁₂-Cycloalkyl- und C₁₋₂₄-Alkenylreste wurden bereits weiter oben exemplarisch aufgeführt. Genannt seien hier nochmals für:
C₁-C₂₄-Alkylgruppen Methyl, Ethyl, Propyl, Isopropyl, Butyl, Isobutyl, sec.-Butyl, tert.-Butyl, Pentyl, Isopentyl, Neopentyl, tert.-Pentyl, Hexyl, 2-Methylpentyl, Heptyl, 1-Ethylpentyl, Octyl, 2-Ethylhexyl, Isooctyl, Nonyl, Isononyl, Decyl, Isodecyl, Undecyl, Dodecyl, Tridecyl, Isotridecyl, Tetradecyl, Pentadecyl, Hexadecyl, Heptadecyl und Octadecyl (die obigen Bezeichnungen Isooctyl, Isononyl, Isodecyl und Isotridecyl sind Trivialbezeichnungen und stammen von den nach der Oxosynthese erhaltenen Alkoholen - vgl. dazu Ullmanns Encyklopädie der technischen Chemie, 4. Auflage, Band 7, Seiten 215 bis 217, sowie Band 11, Seiten 435 und 436);
C₃-C₁₂-Cycloalkylgruppen, welche gegebenenfalls substituiert sind, Cycloheptyl, Cyclooctyl, Cyclohexyl, Cyclopentyl, Methylcyclohexyl und dessen entsprechende Isomeren; C₂-C₂₄-Alkenylgruppen Vinyl, 1- und 2-Propenyl, 1-, 2- und 3-Butenyl, 1-, 2-, 3- und 4-Pentenyl, 1-, 2-, 3-, 4- und 5-Hexenyl.

Besonders bevorzugte Verbindungen der Komponente (e) sind 2,5,7,8-Tetramethyl.2.(4',8',12'-Trimethyltridecyl)-chroman-6-ol (α-Tocopherol), 2,5,8-Trimethyl.2.(4',8',12'-Trimethyltridecyl)-chroman-6-ol (β-Tocopherol), 2,7,8-Trimethyl.2.-(4',8',12'-Trimethyltridecyl)-chroman-6-ol (γ-Tocopherol), 2,8-Dimethyl.2.-(4',8',12'-Trimethyltridecyl)-chroman-6-ol (δ-Tocopherol), 3,4-Dihydro-2,2,5,7,8-pentamethyl-2H-1-benzopyran-6-ol und 6-Hydroxy-2,5,7,8-tetramethylchroman-2-carbonsäure (Trolox).

Als mögliche Komponente (f) kann in den Stabilisatormischungen mindestens ein organisches oder anorganisches Salz ausgewählt aus der Gruppe bestehend aus Zink-, Calcium-, Magnesium-, Cer-, Eisen- und Mangansalzen enthalten sein.

Im Falle der Cer-, Eisen- und Mangansalze ist die Oxidationsstufe +2 des Eisens und Mangans und +3 des Cers von Bedeutung.

Bevorzugte organische Salze von Zink, Calcium, Magnesium, Eisen(II) und Mangan(II) entsprechen der Formel Me(An)₂, bevorzugte organische Salze von Cer(III) der Formel Ce(An)₃, wobei Me für Zink, Calcium, Magnesium, Eisen(II) oder Mangan(II) und An für ein Anion einer organischen Säure oder eines Enols steht. Die Säure kann linear oder verzweigt, gesättigt oder ungesättigt, aliphatisch, aromatisch, araliphatisch oder cycloaliphatisch und gegebenenfalls noch mit Hydroxyl- oder Alkyoxylgruppen substituiert sein. Vorzugsweise enthält die Säure ein bis 24 Kohlenstoffatome. Solche organischen Säuren sind beispielsweise Sulfonsäuren, Sulfinsäuren, Phosphonsäuren oder Phosphinsäuren, vorzugsweise Carbonsäuren.

Beispiele für Carbonsäuren dieses Typs sind Ameisen-, Essig-,

Propion-, Butter-, Iosobutter-, Capron-, 2-Etyhlcapron-, Capryl-, Caprin-, Laurin-, Palmitin-, Stearin-, Behen-, Öl-, Milch-, Rizinolein-, 2-Ethoxypropion-, Benzoe-, Salicyl-, 4-Butylbenzoe-, 2-, 3- oder 4-Toluyl-, 4-Dodecylbenzoe-, Phenylessig-, Naphthylessig-, Cyclohexancarbon-, 4-Butylcyclohexancarbon- und Cyclohexylessigsäure. Die Carbonsäure kann auch als technisches Gemisch von Carbonsäuren, beispielsweise von Fettsäuren oder von alkylierten Benzoesäuren, vorliegen.

Beispiele für organische Säuren, die Schwefel oder Phosphor enthalten, sind Methansulfon-, Ethansulfon-, Dodecansulfon-, Benzolsulfon-, Toluolsulfon-, 4-Nonylbenzolsulfon-, Benzosulfin- oder Naphthalinsulfonsäure, Dodecansulfin-, Benzolsulfin- oder Naphthalinsulfinsäure, Butylphosphonsäure, Phenylphosphonsäure und deren Monoalkylester und Diphenylphosphinsäure.

Wenn An ein Enolation ist, ist es vorzugsweise ein Anion einer β-Dicarbonylverbindung oder eines o-Acylphenols. Beispiele für β-Dicarbonylverbindungen sind Acetylaceton, Benzoylaceton, Dibenzoylmethan, Acetessigsäuremethylester, Acetessigsäureethylester, Acetessigsäurebutylester, Acetessigsäurelaurylester und α-Acetylcyclohexanon. Beispiele für o-Acylphenole sind 2-Acetylphenol, 2-Butyroylphenol, 2-Acetylnaphthol, 2-Benzoylphenol oder Salicylaldehyd. Das Enolat ist vorzugsweise das Anion einer β-Dicarbonylverbindung mit 5 bis 20 Kohlenstoffatomen.

Organische Salze von Zink, Calcium, Magnesium, Eisen(II), Mangan(II) und Cer(III) enthalten vorzugsweise als Anionen Acetylacetonat oder ein aliphatisches Monocarboxylat mit beispielsweise 1 bis 24 Kohlenstoffatomen. Magnesiumacetat, -laurat und -stearat, Zinkformiat, -acetat, -önanthat, -laurat und -stearat, Calciumacetat, - laurat und -stearat, Manganaceat, -laurat und - stearat, Zinkacetylacetonat, Calciumacetylacetonat, Magnesiumacetylacetonat und Manganacetylacetonat sind einige der besonders bevorzugten Salze.

Als anorganische Salze von Zink, Calcium, Magnesium, Eisen(II), Mangan(II) und Cer(III) sind vorzugsweise deren Oxide, Hydroxide, Carbonate sowie für Magnesium natürlicher oder synthetischer Dolomit oder Hydrotalcit anzusprechen. Die anorganischen Salze werden als feine Pulver mit mittleren Teilchengrößen von wenigen µm, bevorzugt von wenigen nm eingesetzt.

Die feinteiligen, wenigstens einen UV-Absorber enthaltenden Polymerpulver und die erfindungesgemäßen Stabilisatormischungen eignen sich in hervorragender Weise zur Stabilisierung von Polymeren gegen die Einwirkung von UV-Strahlung bzw. gegen die Einwirkung von UV-Strahlung, Sauerstoff und Wärme. Beispiele von Polymeren, welche durch die Polymerpulver bzw. Stabilisatormischungen stabilisiert werden können sind:
1. Polymere aus Monoolefinen und Diolefinen, wie etwa Polypropylen, Polyisobutylen, Polybut-1-en, Poly-4-methylpent-1-en, Polyisopren oder Polybutadien; ebenso Polymere aus Cycloolefinen, wie etwa Polycyclopenten oder Polynorbonen; Polyethylen (welches gegebenenfalls vernetzt sein kann), wie etwa, HDPE, HDPE-HMW, HDPE-UHMW, MDPE, LDPE, LLDPE, BLDPE, VLDPE und ULDPE;
   Die Polyolefine, wie etwa auf Basis der zuvor erwähnten Monoolefine, vorzugsweise Polyethylen und Polypropylen, können nach allen literaturbekannten Verfahren hergestellt worden sein, insbesondere gemäß der nachfolgenden Verfahren:
   (a) radikalische Polymerisation (im Allgemeinen bei hohen Drücken und Temperaturen durchgeführt);
   (b) katalytische Polymerisation unter Verwendung von Katalysatoren, welche üblicherweise ein oder mehrer Metalle der Gruppen IVB, VB, VIB oder VIII (Gruppen 4, 5, 6 oder 8/9/10 nach IUPAC) des Periodensystems enthalten. Diese Metalle besitzen im Allgemeinen einen oder mehrere Liganden, wie z.B. Oxide, Halogenide, Alkoholate, Ester, Ether, Amine, Alkyle, Alkenyle und/oder Aryle, wobei die Liganden π- oder σ-koordiniert sein können. Die Metallkomplexe wiederum können in freier oder geträgerter Form auf Substraten vorliegen; beispielsweise sind als Katalysatoren zu nennen aktiviertes Magnesiumchlorid, Titan-(III)chlorid, Aluminium- oder Siliziumoxid. Die besagten Katalysatoren können sowohl löslich als auch unlöslich im Polymerisationsmedium sein, wobei sie im geträgerten Falle natürlich unlöslich sind. Die Katalysatoren können alleine oder in Gegenwart anderer Aktivatoren, wie z.B. Metallalkylen, Metallhydriden, Halogeniden oder Oxiden von Metallalkylen oder Metallalkyloxanen (stimmt das? was sind das für Verbindungen?) zugegen sein, wobei die Metalle dieser Aktivatoren zu den Gruppen IA, IIA und/oder IIIA (Gruppen 1, 2 oder 13 nach IUPAC) des Periodensystems gehören. Diese Aktivatoren können in einfacher Weise mit anderen Ester-, Ether, Amin- oder Silylethergruppen modifiziert werden. Diese katalytischen Systeme werden üblicherweise als Phillips-, Standard-Oil-Indiana-, Ziegler(-Natta)-, TNZ- (DuPont), Metallocen- oder "single site catalyst"-(SSC-)Katalysatoren bezeichnet.
2. Mischungen von Polymeren wie unter Punkt 1. beschrieben, wie etwa Mischungen von Polypropylen mit Polyisobutylen; Mischungen von Polypropylen mit Polyethylen, beispielsweise PP/HDPE,
   PP/LDPE); Mischungen von verschiedenen Typen von Polyethylen, beispielsweise LDPE/HDPE.
3. Copolymere von Monoolefinen und Diolefinen miteinander oder mit anderen vinylgruppenhaltigen Monomeren. Beispiele solcher Copolymere sind Ethylen/Propylen-Copolymere, LLDPE und seine Mischungen mit LDPE, Propylen/But-1-en-Copolymere, Propylen/Isobutylen-Copolymere, Ethylen/But-1-en-Copolymere, Ethylen/Hexen-Copolymere, Ethylen/Methylpenten-Copolymere, Ethylen/Hepten-Copolymere, Ethylen/Octen-Copolymere, Propylen/Butadien-Copolymere, Isobutylen/Isopren-Copolymere, Ethylen/Alkylacrylat-Copolymere, Ethylen/Alkylmethacrylat-Copolymere, Ethylen/Vinylacetat-Copolymere und ihre Copolymere mit Kohlenmonoxid oder Ethylen/Acrylsäure-Copolymere und ihre Salze (Ionomere) sowie Terpolymere von Ethylen mit Propylen und einem Dien, wie etwa Hexadien, Dicyclopentadien oder Ethylidennorbonen; ebenso Mischungen der genannten Copolymere miteinander oder mit den unter Punkt (1) aufgeführten Polymeren, wie etwa Polypropylen/Ethylen/Propylen-Copolymere, LDPE/Ethylen/Vinylacetat-(EVA-)Copolymere, LDPE/ Ethylen/Acrylsäure-(EAA-)Copolymere, LLDPE/EVA, LLDPE/EAA und alternierende oder statistische Polyalkylen/Kohlenmonoxid-Copolymere und ihre Mischungen mit anderen Polymeren, wie z.B. Polyamiden.
4. Polystyrol, Poly(p-methylstyrol), Poly(α-methylstyrol).
5. Copolymere von Styrol oder α-Methylstyrol mit Dienen oder Acrylsäurederivativen, wie etwa Styrol/Butadien, Styrol/Acrylnitril, Styrol/Alkylmethacrylat, Styrol/Butadien/Alkylacrylat, Styrol/Butadien/Alkylmethacrylat, Styrol/Maleinsäureanhydrid, Styrol/Acrylnitril/Methylacrylat; Mischungen hoher Schlagzähigkeit zwischen Styrol-Copolymeren und anderen Polymeren, wie etwa Polyacrylaten, Dien-Polymeren oder Ethylen/Propylen/Dien-Terpolymeren, Block-Copolymeren von Styrol, wie etwa Styrol/Butadien/Styrol, Styrol/Isopren/Styrol, Styrol/Ethylen/Butylen/Styrol oder Styrol/Ethylen/Propylen/Styrol.
6. Pfropf-Copolymere von Styrol oder α-Methylstyrol, wie etwa Styrol in Polybutadien, Styrol in Polybutadien/Styrol- oder Polybutadien/Acrylnitril-Copolymeren; Styrol und Acrylnitril (oder Methacrylnitril) in Polybutadien; Styrol, Acrylnitril und Methylmethacrylat in Polybutadien; Styrol und Maleinsäureanhydrid in Polybutadien; Styrol, Acrylnitril und Maleinsäureanhydrid oder Maleimid in Polybutadien; Styrol und Maleimid in Polybutadien; Styrol und Alkylacrylate oder Alkylmethacrylate in Polybutadien; Styrol und Acrylnitril in Ethylen/Propylen/Dien-Terpolymeren, Styrol und Acrylnitril in Polyalkylacrylaten oder Polyalkylmethacrylaten, Styrol und Acrylnitril in Acrylat/Butadien-Copolymeren, sowie Mischungen von Copolymeren, welche unter Punkt (5) aufgeführt wurden, wie etwa Mischungen bekannter Copolymere, wie ABS, MBS, ASA oder AES.
7. Halogenhaltige Polymere, wie etwa Polychloropren, chlorierte Elastomere, chlorierte oder bromierte Isobutylen/Isopren-Copolymere ("halobutyl rubber"), chlorierte oder chlorosulfoniertes Polyethylen, Ethylen- und chlorierte Ethylen-Copolymere, Homopolymere und Copolymere von Epichlorhydrin, insbesondere Polymere von halogenhaltigen Vinylverbindungen, wie etwa Polyvinylchlorid, Polyvinylidenchlorid, Polyvinylfluorid oder Polyvinylidenfluorid; ebenso ihre Copolymere, beispielsweise basierend auf Vinylchlorid/Vinylidenchlorid, Vinylchlorid/Vinylacetat oder Vinylidenchlorid/Vinylacetat.
8. Von α,β-ungesättigten Säuren und ihren Derivaten abgeleitete Polymere, wie etwa Polyacrylate und Polymethacrylate, Polymethylmethacrylate, Polyacrylamiden und Polyacrylnitrilen, schlagzäh-modifiziert mit Butylacrylat.
9. Copolymere basierend auf Monomeren aus Punkt (8) miteinander oder mit anderen ungesättigten Monomeren, wie etwa Acrylnitril/Butadien-Copolymeren, Acrylnitril/Alkylacrylat-Copolymeren, Acrylnitril/Alkoxyalkylacrylat-Copolymeren oder Acrylnitril/Vinylhalogenid-Copolymeren oder Acrylnitril/Alkylmethacrylat/Butadien-Terpolymeren.
10. Von ungesättigten Alkoholen und Aminen oder ihren Acyl- oder Acetalderivativen abgeleitete Polymere, wie etwa Polyvinylalkohol, Polyvinylacetat, Polyvinylstearat, Polyvinylbenzoat, Polyvinylmaleat, Polyvinylbutyral, Polyallylphthalat oder Polyallylmelamin; ebenso ihre Copolymere mit den unter Punkt (1) aufgeführten Olefinen.
11. Homopolymere und Copolymere von offenkettigen oder cyclischen Ethern, wie etwa Polyalkylenglycolen, Polyethylenoxid, Polypropylenoxid oder Copolymere der zuvor beschriebenen Verbindungen mit Bisglycidylethern.
12. Polyacetale, wie etwa Polyoxymethylen und Polyoxymethylen enthaltende Comonomere, beispielsweise Ethylenoxid; mit thermoplastischen Polyurethanen, Acrylaten oder MBS modifizierte Polyacetale.
13. Polyphenylenoxide und -sulfide und ihre Mischungen mit Styrolpolymeren oder Polyamiden.
14. Von hydroxyterminierten Polyethern, Polyestern oder Polybutadienen einerseits und aliphatischen oder aromatischen Polyisocyanaten andererseits und ihren jeweiligen Vorläuferverbindungen abgeleitete Polyurethane.
15. Polyamide und Copolyamide, abgeleitet Diaminen und Dicarbonsäuren und/oder Aminocarbonsäuren oder entsprechenden Lactamen, wie etwa Polyamid 4, Polyamid 6, Polyamid 6/6, 6/10, 6/9, 6/12, 4/6, 12/12, Polyamid 11, Polyamid 12, aromatische Polyamide ausgehend m-Xyloldiamin und Adipinsäure; Polyamide ausgehend von Hexamethylendiamin und Isophthal- und/oder Terephthalsäure und mit oder ohne einem Elastomer als Modifizierer, wie etwa Poly-2,4,4-trimethylhexamethylenterephthalamid oder Poly-m-phenylenisophthalamid; ebenso Blockcopolymere der obigen Polyamide mit Polyolefinen, olefinischen Copolymeren, Ionomeren oder Elastomeren, chemisch gebunden oder gepfropft, oder mit Polyethern, wie etwa Polyethylenglycol, Polypropylenglycol oder Polytetramethylenglycol; ebenso Polyamide oder Copolyamide modifiziert mit EPDM oder ABS und während der Verarbeitung condensierte Polyamide ("RIM-Polyamid-System").
16. Polyharnstoffe, Polyimide, Polyamidimide, Polyetherimide, Polyesterimide, Polyhydantoine und Polybenzoimidazole.
17. Von Dicarbonsäuren und Diolen und/oder von Hydroxycarbonsäuren oder den entsprechenden Lactonen abgeleitete Polyester, wie etwa Polyethylenterephthalat, Polybutylenterephthalat, Poly-1,4-dimethylolcyclohexanterephthalat und Polyhydroxybenzoate, ebenso Block-Copolyetherester, welche von Polyethern mit hydroxyl-terminierten Gruppen abgeleitet sind, sowie mit Polycarbonaten oder MBS modifizierte Polyester.
18. Polycarbonate und Polyestercarbonate.
19. Polysulfone, Polyethersulfone und Polyetherketone.
20. Vernetzte Polymere, welche einerseits von Aldehyden und andererseits von Phenolen, Harnstoff und Melaminen abgeleitet sind, wie etwa Phenol/Formaldehyd-, Harnstoff/Formaldehyd- und Melamin/Formaldehyd-Harze.
21. Getrocknete und ungetrocknete Alkyd-Harze.
22. Harze basierend auf ungesättigten Polyestern, welche sich ableiten von Copolyestern gesättigter und ungesättigter Carbonsäuren mit mehrwertigen Alkoholen und Vinylverbindungen als Vernetzer, ebenso die oben genannten halogenhaltigen flammbeständigen Harze.
23. Vernetzbare, von substituierten Acrylaten abgeleitete AcrylHarze, wie etwa Epoxyacrylate, Urethanacrylate oder Polyesteracrylate.
24. Alkyd-Harze, Harze basierend auf Polyestern oder acrylierte, mit Melamin vernetzte Harze, Harze basierend auf Harnstoff, Harze basierend auf Isocyanate, Harze basierend auf Isocyanuraten, Harze basierend auf Polyisocyanaten oder Epoxy-Harze.
25. Vernetzte, von aliphatischen, cycloaliphatischen, heterocyclischen oder aromatischen Glycidylverbindungen abgeleitete Epoxy-Harze, wie etwa Produkte aus Diglycidylethern von Bisphenol A und Bisphenol F, welche mit üblichen Vernetzern, wie etwa Anhydriden oder Aminen in Gegenwart oder Abwesenheit von Beschleunigern, vernetzt sind.
26. Natürlich vorkommende Polymere, wie etwa Cellulose, Gummi, Gelatine und ihre, zur Erzielung homologer Polymere chemisch modifizierten Derivative, wie etwa Celluloseacetate, -propionate und -butyrate, oder Celluloseether, wie etwa Methylcellulose; ebenso Kohlenwasserstoff-Harze ("rosins") und ihre Derivative.
27. Mischungen der genannten Polymere ("polyblends"), wie etwa PP/EPDM, Polyamide/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylate, POM/MBS, PPO/HIPS, PPO/PA 6.6 und Copolymere, PA/HDPE, PAPP, PAPPO, PBT/PC/ABS, PBT/PET/PC.
28. Natürliche oder synthetische organische Materialien, welche reine monomere Verbindungen sind sowie deren Mischungen, wie etwa Mineralöle, tierische oder pflanzliche Öle, Fette oder Wachse, Öle, Fette oder Wachse basierend auf synthetischen Estern, z.B. Phthalate, Adipate, Phosphate und Trimellitate, sowie Mischungen von synthetischen Estern mit Mineralölen in beliebigen Gewichtsverhältnissen, sowie wässrige Emulsionen der genannten organischen Materialien.
29. Wässrige Emulsionen von natürlichen oder synthetischen Gummis, wie etwa natürlicher Latex oder Latices basierend auf carboxylierten Styrol/Butadien-Copolymeren.

Die feinteiligen, wenigstens einen UV-Absorber enthaltenden Polymerpulver bzw. erfindungsgemäßen Stabilisatormischungen können auch in der Herstellung von Polyurethanen, insbesondere in der Herstellung von Polyurethanschäumen, Verwendung finden. Die solchermaßen erhaltenen Polyurethane und Polyurethanschäume werden hierdurch gegen die Einwirkung von UV-Strahlung bzw. gegen die Einwirkung von UV-Strahlung, Sauerstoff und Wärme geschützt.

Die Polyurethane können beispielsweise durch Umsetzung von Polyethern, Polyestern und Polybutadienen, welche terminale Hydroxylgruppen enthalten, mit aliphatischen oder aromatischen Polyisocyanaten erhalten werden.

Polyether mit terminalen Hydroxylgruppen sind allgemein bekannt und lassen sich beispielsweise herstellen durch Polymerisation von Epoxiden, wie z.B. Ethylenoxid, Propylenoxid, Butylenoxid, Styroloxid oder Epichlorohydrin, etwa in Gegenwart von Bortrifluorid oder durch Additionsreaktion der Epoxide, alleine oder in Mischung miteinander, oder in Folgereaktion mit Startern, welche reaktive Wasserstoffatome enthalten, wie etwa Wasser, Alkohole, Ammoniak oder Amine, wie etwa Ethylenglycol, Propylen-1,2- oder -1,3-glycol, Trimethylolpropan, 4,4'-Dihydroxydiphenylpropan, Anilin, Ethanolamin oder Ethylendiamin. Polyether, welche Sucrose enthalten, können ebenso verwendet werden. In den meisten Fällen bevorzugt man Polyether mit einer großen Zahl an primären OH-Gruppen (bis zu 90 % der insgesamt im Polyether vorhandenen OH-Gruppen). Zusätzlich können mit Vinylpolymeren modifizierte Polyether Verwendung finden, welche etwa hergestellt werden durch Polymerization von Styrol und Acrylnitril in Gegenwart von Polyethern, welche Polybutadiene mit OH-Gruppen sind.

Die zuvor genannten Verbindungen sind Polyhydroxyverbindungen und besitzen Molekulargewichte im Bereich von 400 bis 10 000 g/mol, insbesondere von 800 bis 10 000 g/mol, vorzugsweise von 1 000 bis 6 000 g/mol, dementsprechend besitzen etwa die Polyether wenigstens 2, üblicherweise 2 bis 8, aber vorzugsweise 2 bis 4 Hydroxylgruppen und sind für die Herstellung homogener Polyurethane und zellulärer Polyurethane bekannt.

Selbstverständlich können auch Mischungen der oben genannten Verbindungen, welche mindestens zwei gegenüber Isocyanatgruppen reaktive Wasserstoffatome besitzen und vorzugsweise ein Molekulargewicht von 400 bis 10 000 g/mol aufweisen, verwendet werden.

Geeignet sind aliphatische, cycloaliphatische, araliphatische, aromatische und heterocyclische Polyisocyanate, wie etwa Ethylendiisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie Mischungen dieser Isomeren; 1-Isocyanat-3,3,5-trimethyl-5-isccyanatmethylcyclohexan, 2,4- und 2,6-Hexahydrotolylendiisocyanat sowie Mischungen dieser Isomeren; Hexahydro-1,3- und/oder -1,4-phenylendiisocyanat, Perhydro-2,4'- und/oder -4,4'-diphenylmethandiisocyanat, 1,3- und 1,4-Phenylendiisocyanat, 2,4- und 2,6-Tolylendiisocyanat sowie Mischungen dieser Isomeren; Diphenylmethan-2,4'- und/oder -4,4'-diisocyanat, Naphthylen-1,5-diisocyanat, Triphenylmethan-4,4',4"-triisocyanat, Polyphenylpolymethylenpolyisocyanate, erhalten durch Anilin/Formaldehyd-Kondensation gefolgt von Phosgenierung, m- und p-Isocyanatphenylsulfonylisocyanate, perchlorierte Arylpolyisocyanate, carbodiimid-Gruppen enthaltende Polyisocyanate, Allophanat-Gruppen enthaltende Polyisocyanate, Isocyanurat-Gruppen enthaltende Polyisocyanate, Urethan-Gruppen enthaltende Polyisocyanates, acylierte Harnstoff-Gruppen enthaltende Polyisocyanate, Biuret-Gruppen enthaltende Polyisocyanate, Ester-Gruppen enthaltende Polyisocyanate, die Reaktionsprodukte der oben genannten Isocyanate mit Acetalen sowie Polyisocyanates, welche Reste polymerer Fettsäuren enthalten.

Weiter ist es auch möglich, Destillationsrückstände zu verwenden, welche Isocyanat-Gruppen enthalten, wobei diese Rückstände als solches oder gelöst in einem oder mehreren der oben genannten Polyisocyanate vorliegen und während der industriellen Herstellung von Isocyanaten anfallen. Weiter ist auch die Verwendung beliebiger Mischungen der oben genannten Polyisocyanate möglich.

Auf leichtem Wege industriell zugängliche Polyisocyanate finden bevorzugt Verwendung, Beispiele hierfür sind etwa 2,4- und -2,6-Tolylendiisocyanat sowie beliebeige Mischungen dieser Isomeren ("TDI"); Polyphenylpolymethylenpolyisocyanate, erhalten durch Anilin/Formaldehyd-Kondensation gefolgt von Phosgenierung ("crude MDI"); Polyisocyanate, enthaltend Carboimid-, Urethan-, Allophanat-, Isocyanurat-, Harnstoff- und/oder Biuret-Gruppen (sogenannte modifizierte Polyurethane).

Als Polymere, welche durch die UV-Absorber enthaltenden Polymerpulver bzw. die erfindungsgemäßen Stabilisatormischungen stabilisiert werden können, sind auch Lacke bzw. die in ihnen enthaltenden Bindemittel zu verstehen. Letztere bestehen üblicherweise aus einem oder mehreren der unter den zuvor genannten Punkten 1. bis 29. beschriebenen Polymeren, insbesondere einem oder mehreren Polymeren, welche unter den Punkten 20. bis 25. beschrieben sind, oder sie enthalten diese.

Die Polymere, welche durch die UV-Absorber enthaltenden Polymerpulver bzw. die erfindungsgemäßen Stabilisatormischungen stabilisiert werden können, sind vorzugsweise solche aus den zuvor beschriebenen Gruppen ausgewählte natürliche, halbsynthetische oder synthetische Polymere. Insbesondere finden die UV-Absorber enthaltenden Polymerpulver bzw. die erfindungsgemäßen Stabilisatormischungen in der Stabilisierung von thermoplastischen Polymeren, vorzugsweise von Polyolefinen, besonders bevorzugt von Polyethylen und Polypropylen oder ihren Copolymeren mit Mono- und Diolefinen Verwendung.

Gegenstand der vorliegenden Erfindung sind daher auch gegen die Einwirkung von UV-Strahlung stabilisierte Polymere, insbesondere Polyolefine, welche eine effektive Menge feinteiliger, wenigstens einen UV-Absorber enthaltender Polymerpulver, auch unter Berücksichtigung ihrer bevorzugten Ausführungsformen, enthalten.

Weiter sind Gegenstand der vorliegenden Erfindung auch gegen die Einwirkung von UV-Strahlung, Sauerstoff und Wärme stabilisierte Polymere, insbesondere Polyolefine, welche eine effektive Menge von erfindungsgemäßen Stabilisatormischungen, auch unter Berücksichtigung ihrer bevorzugten Ausführungsformen, enthalten.

Weiterer Gegenstand der vorliegenden Erfindung sind Gegenstände, welche aus den zuvor genannten erfindungsgemäßen, gegen die Einwirkung von UV-Strahlung bzw. gegen die Einwirkung von UV-Strahlung, Sauerstoff und Wärme stabilisierten Polymeren, insbesondere Polyolefinen, hergestellt worden sind.

Die Komponente (a) und die mindestens eine weitere Komponente, ausgewählt aus der Gruppe bestehend aus den Komponenten (b) bis (f) der erfindungsgemäßen Stabilisatormischungen können sowohl einzeln als auch in Mischung miteinander den Polymeren zugegeben werden.

Komponente (a) wird den zu stabilisierenden Polymeren in einer Menge von 0,0005 bis 5 Gew.-%, vorzugsweise von 0,001 bis 2 Gew.-%, und insbesondere von 0,01 bis 2 Gew.-%, bezogen auf das

Gewicht der zu stabilisierenden Polymeren, zugegeben.

Komponenten (b) und/oder (c) und/oder (d) und/oder (e) und/oder (f) werden den zu stabilisierenden Polymeren jeweils in einer Menge von 0,01 bis 10 Gew.-%, vorzugsweise von 0,01 bis 5 Gew.-%, besonders bevorzugt von 0,025 bis 3 Gew.-%, und insbesondere von 0,025 bis 1 Gew.-%, bezogen auf das Gewicht der zu stabilisierenden Polymeren, zugegeben.

Werden die Komponente (a) und (b) und/oder (c) und/oder (d) und/oder (e) und/oder (f) der erfindungsgemäßen Stabilisatormischungen als Mischung den zu stabilisierenden Polymeren zugegeben, sind sie entsprechend den zuvor beschriebenen Mengen (bezogen auf das Gewicht der zu stabilisierenden Polymeren) in den erfindungsgemäßen Stabilisatormischungen enthalten.

Bevorzugte Stabilisatormischungen enthalten Komponenten (a) und (b) sowie gegebenenfalls noch weitere Verbindungen ausgewählt aus der Gruppe der Komponenten (c), (d), (e) und (f).

Weitere bevorzugte Stabilisatormischungen enthalten neben Komponenten (a) und (b) noch mindestens eine Verbindung ausgewählt aus der Gruppe bestehend aus sterisch gehinderten Phenolen als Komponente (c) sowie gegebenenfalls noch weitere Verbindungen ausgewählt aus der Gruppe der Komponenten (d), (e) und (f).

Weitere bevorzugte Stabilisatormischungen enthalten neben Komponente (a) und (b) noch mindestens eine Verbindung ausgewählt aus der Gruppe bestehend aus sterisch gehinderten Aminen als Komponente (d) sowie gegebenenfalls noch weitere Verbindungen ausgewählt aus der Gruppe der Komponenten (c), (e) und (f).

Weitere bevorzugte Stabilisatormischungen enthalten neben Komponente (a) und (b) noch mindestens eine Verbindung ausgewählt aus der Gruppe der Chromane als Komponente (e) sowie gegebenenfalls noch weitere Verbindungen ausgewählt aus der Gruppe der Komponenten (c), (d) und (f).

Weitere bevorzugte Stabilisatormischungen enthalten neben Komponente (a) und (b) noch mindestens ein organisches oder anorganisches Salz ausgewählt aus der Gruppe bestehend aus Zink-, Calcium-, Magnesium-, Cer-, Eisen- und Mangansalzen als Komponente (f) sowie gegebenenfalls noch weitere Verbindungen ausgewählt aus der Gruppe der Komponenten (c), (d) und (e).

Weitere bevorzugte Stabilisatormischungen enthalten neben Komponenten (a) und (b) noch mindestens eine Verbindung ausgewählt aus der Gruppe bestehend aus sterisch gehinderten Phenolen als Komponente (c) und noch mindestens eine Verbindung ausgewählt aus der Gruppe bestehend aus sterisch gehinderten Aminen als Komponente (d) sowie gegebenenfalls noch weitere Verbindungen ausgewählt aus der Gruppe der Komponenten (e) und (f).

Weitere bevorzugte Stabilisatormischungen enthalten neben Komponente (a) und (b) noch mindestens eine Verbindung ausgewählt aus der Gruppe bestehend aus sterisch gehinderten Phenolen als Komponente (c) und noch mindestens eine Verbindung ausgewählt aus der Gruppe der Chromane als Komponente (e) sowie gegebenenfalls noch weitere Verbindungen ausgewählt aus der Gruppe der Komponenten (d) und (f).

Weitere bevorzugte Stabilisatormischungen enthalten neben Komponente (a) und (b) noch mindestens eine Verbindung ausgewählt aus der Gruppe bestehend aus sterisch gehinderten Phenolen als Komponente (c) und noch mindestens ein organisches oder anorganisches Salz ausgewählt aus der Gruppe bestehend aus Zink-, Calcium-, Magnesium-, Cer-, Eisen- und Mangansalzen als Komponente (f) sowie gegebenenfalls noch weitere Verbindungen ausgewählt aus der Gruppe der Komponenten (d) und (e).

Weitere bevorzugte Stabilisatormischungen enthalten neben Komponente (a) und (b) noch mindestens eine Verbindung ausgewählt aus der Gruppe bestehend aus sterisch gehinderten Aminen als Komponente (d) und noch mindestens eine Verbindung ausgewählt aus der Gruppe der Chromane als Komponente (e) sowie gegebenenfalls noch weitere Verbindungen ausgewählt aus der Gruppe der Komponenten (c) und (f).

Weitere bevorzugte Stabilisatormischungen enthalten neben Komponente (a) und (b) noch mindestens eine Verbindung ausgewählt aus der Gruppe bestehend aus sterisch gehinderten Aminen als Komponente (d) und mindestens ein organisches oder anorganisches Salz ausgewählt aus der Gruppe bestehend aus Zink-, Calcium-, Magnesium-, Cer-, Eisen- und Mangansalzen als Komponente (f) sowie gegebenenfalls noch weitere Verbindungen ausgewählt aus der Gruppe der Komponenten (c) und (e).

Weitere bevorzugte Stabilisatormischungen enthalten neben Komponente (a) und (b) und noch mindestens eine Verbindung ausgewählt aus der Gruppe der Chromane als Komponente (e) und mindestens ein organisches oder anorganisches Salz ausgewählt aus der Gruppe bestehend aus Zink-, Calcium-, Magnesium-, Cer-, Eisen- und Mangansalzen als Komponente (f) sowie gegebenenfalls noch weitere Verbindungen ausgewählt aus der Gruppe der Komponenten (c) und (d).

Weitere bevorzugte Stabilisatormischungen enthalten neben Komponente (a) und (b) noch mindestens eine Verbindung ausgewählt aus der Gruppe bestehend aus sterisch gehinderten Phenolen als Komponente (c), noch mindestens eine Verbindung ausgewählt aus der Gruppe bestehend aus sterisch gehinderten Aminen als Komponente (d) und noch mindestens eine Verbindung ausgewählt aus der Gruppe der Chromane als Komponente (e) sowie gegebenenfalls noch weitere Verbindungen der Komponente (f).

Weitere bevorzugte Stabilisatormischungen enthalten neben Komponente (a) und (b) noch mindestens eine Verbindung ausgewählt aus der Gruppe bestehend aus sterisch gehinderten Phenolen als Komponente (c), noch mindestens eine Verbindung ausgewählt aus der Gruppe bestehend aus sterisch gehinderten Aminen als Komponente (d) und mindestens ein organisches oder anorganisches Salz ausgewählt aus der Gruppe bestehend aus Zink-, Calcium-, Magnesium-, Cer-, Eisen- und Mangansalzen als Komponente (f) sowie gegebenenfalls noch weitere Verbindungen der Komponente (e).

Selbstverständlich können den Polymeren auch noch reine, d.h. nicht in einer Polymermatrix eingebetete oder durch eine Polymermatrix teilweise oder vollständig umhüllte UV-Absorber neben den

UV-Absorber enthaltenden Polymerpulvern zugegeben werden bzw. können die erfindungsgemäßen Stabilisatormischungen zusätzlich noch reine UV-Absorber enthalten, die beispielsweise eingangs aufgeführt wurden.

Die erfindungsgemäßen Stabilisatormischungen können darüberhinaus noch weitere Stabilisatoren (Co-Stabilisatoren), ausgewählt aus den nachfolgend aufgeführten Gruppen, enthalten.

### 1. Antioxidantien und Radikalfänger

1.1 Alkylatierte Monophenole, wie etwa: 2,6-Di-tert.-butyl-4-methylphenol, 2-tert.-Butyl-4,6-dimethylphenol, 2,6-Di-tert.-butyl-4-ethylphenol, 2,6-Di-tert.-butyl-4-n-butylphenol, 2,6-Di-tert.-butyl-4-isobutylphenol, 2,6-Dicyclopentyl-4-methylphenol, 2-(α-methylcyclohexyl)-4,6-dimethylphenol, 2,6-Dioctadecyl-4-methylphenol, 2,4,6-Tricyclohexylphenol, 2,6-Di-tert.-butyl-4-methoxymethylphenol, Nonylphenole mit linearen oder verzweigten Alkylketten, wie etwa 2,6-Dinonyl-4-methylphenol, 2,4-Dimethyl-6-(1'-methylundec-1'-yl)phenol, 2,4-Dimethyl-6-(1'-methylheptadec-1'-yl)-phenol, 2,4-Dimethyl-6-(1'-methyltridec-1'-yl)phenol und ihre Mischungen.
1.2 Alkylthiomethyliphenole, wie etwa: 2,4-Dioctylthiomethyl-6-tert.-butylphenol, 2,4-Dioctylthiomethyl-6-methylphenol, 2,4-Dioctylthiomethyl-6-ethylphenol, 2,6-Didodecylthiomethyl-4-nonylphenol.
1.3 Hydrochinone und alkylierte Hydrochinone, wie etwa: 2,6-Di-tert.-butyl-4-methoxyphenol, 2,5-Di-tert.-butylhydrochinon, 2, 5-Di-tert.-amylhydrochinon, 2,6-Diphenyl-4-octadecyloxyphenol, 2,6-Di-tert.-butylhydrochinon, 2,5-Di-tert.-butyl-4-hydroxyanisol, 3,5-Di-tert.-butyl-4-hydroxyanisol, 3,5-Di-tert.-butyl-4-hydroxyphenylstearat, Bis(3,5-di-tert.-butyl-4-hydroxyphenyl)adipat.
1.4 Tocopherole, wie etwa: α-Tocopherol, β-Tocopherol, γ-Tocopherol, δ-Tocopherol und ihre Mischungen (Vitamin E).
1.5 Hydroxylierte Thiodiphenylether, wie etwa: 2,2'-Thio-bis(6-tert.-butyl-4-methylphenol), 2,2'-Thio-bis(4-octylphenol), 4,4'-Thio-bis(6-tert.-butyl-3-methylphenol), 4,4'-Thio-bis(6-tert.-butyl-2-methylphenol), 4,4'-Thio-bis(3,6-di-sec.-amylphenol), 4,4'-Bis(2,6-dimethyl-4-hydroxyphenyl)disulfid.
1.6 Alkylidenbisphenole, wie etwa: 2,2'-Methylen-bis(6-tert.-butyl-4-methylphenol), 2,2'-Methylen-bis(6-tert.-butyl-4-ethylphenol), 2,2'-Methylen-bis[4-methyl-6-(α-methylcyclohexyl)phenol], 2,2'-Methylen-bis(4-methyl-6-cyclohexylphenol), 2,2'-Methylen-bis(6-nonyl-4-methylphenol), 2,2'-Methylen-bis(4,6-di-tert.-butylphenol), 2,2'-Ethyliden-bis(4,6-di-tert.-butylphenol), 2,2'-Ethyliden-bis(6-tert.-butyl-4-isobutylphenol), 2,2'-Methylen-bis[6-α-methylbenzyl)-4-nonylphenol], 2,2'-Methylen-bis[6-(α,α-dimethylbenzyl)-4-nonylphenol], 4,4'-Methylen-bis(2,6-di-tert.-butylphenol), 4,4'-Methylen-bis(6-tert.-butyl-2-methylphenol), 1,1-Bis(5-tert.-butyl-4-hydroxy-2-methylphenyl)butan, 2,6-Bis(3-tert.-butyl-5-methyl-2-hydroxybenzyl)-4-methylphenol, 1,1,3-Tris(5-tert.-butyl-4-hydroxy-2-methyl-phenyl)butan, 1,1-Bis(5-tert.-butyl-4-hydroxy-2-methylphenyl)-3-n-dodecylmercaptobutan, Ethylenglycol-bis[3,3-bis(3'-tert.-butyl-4'-hydroxyphenyl)butyrat], Bis(3-tert.-butyl-4-hydroxy-5-methylphenyl)dicyclopentadien, Bis[2-(3'-tert.-butyl-2'-hydroxy-5'-methylbenzyl)-6-tert.-butyl-4-methylphenyl]terephthalat, 1,1-Bis(3,5-dimethyl-2-hydroxyphenyl)butan, 2,2-Bis(3,5-di-tert.-butyl-4-hydroxyphenyl)propan, 2,2-Bis(5-tert.-butyl-4-hydroxy-2-methylphenyl)-4-n-dodecylmercaptobutan, 1,1,5,5-Tetra(5-tert.-butyl-4-hydroxy-2-methylphenyl)pentan.
1.7 Benzylverbindungen, enthaltend Sauerstoff, Stickstoff oder Schwefel, wie etwa: 3,5,3',5'-Tetra-tert.-butyl-4,4'-dihydroxydibenzylether, Octadecyl-4-hydroxy-3,5-dimethylbenzylmercaptoacetat, Tridecyl-4-hydroxy-3,5-di-tert.-butyl-benzylmercaptoacetat, Tris(3,5-di-tert.-butyl-4-hydroxybenzyl)amin, Bis(4-tert.-butyl-3-hydroxy-2,6-dimethylbenzyl)dithioterephthalat, Bis(3,5-di-tert.-butyl-4-hydroxybenzyl)sulfid, Isooctyl-3,5-di-tert.-butyl-4-hydroxybenzylmercaptoacetat.
1.8 Hydroxybenzylierte Malonate, wie etwa: Dioctadecyl-2,2-bis(3,5-di-tert.-butyl-2-hydroxybenzyl)malonat, Dioctadecyl-2-(3-tert.-butyl-4-hydroxy-5-methylbenzyl)malonat, Didodecyl-mercaptoethyl-2,2-bis(3,5-di-tert.-butyl-4-hydroxybenzyl)malonat, Bis[4-(1,1,3,3-tetramethylbutyl)phenyl]-2,2-bis(3,5-di-tert.-butyl-4-hydroxybenzyl)malonat.
1.9 Aromatische Hydroxybenzylverbindungen, wie etwa: 1,3,5-Tris(3,5-di-tert.-butyl-4-hydroxybenzyl)-2,4,6-trimethylbenzol, 1,4-Bis(3,5-di-tert.-butylhydroxyhenzyl)-2,3,5,6-tetramethylbenzol, 2,4,6-Tris(3,5-di-tert.-butyl-4-hydroxybenzyl)phenol.
1.10 Triazinverbindungen, wie etwa: 2,4-Bis(octylmercapto)-6-(3,5-di-tert.-butyl-4-hydroxyanilin)-1,3,5-triazin, 2-Octylmercapto-4,6-bis(3,5-di-tert.-butyl-4-hydroxyanilin)-1,3,5-triazin, 2-Octylmercapto-4,6-bis(3,5-di-tert.-butyl-4-hydroxyphenoxy)-1,3,5-triazin, 2,4,6-Tris(3,5-di-tert.-butyl-4-hydroxyphenoxy)-1,2,3-triazin, 1,3,5-Tris(3,5-di-tert.-butyl-4-hydroxybenzyl)isocyanurat, 1,3,5-Tris(4-tert.-butyl-3-hydroxy-2,6-dimethylbenzyl)isocyanurat, 2,4,6-Tris(3,5-di-tert.-butyl-4-hydroxyphenylethyl)-1,3,5-triazin, 1,3,5-Tris(3,5-di-tert.-butyl-4-hydroxyphenylpropionyl)hexahydro-1,3,5-triazin, 1,3,5-Tris(3,5-dicyclohexyl-4-hydroxybenzyl)isocyanurat.
1.11 Benzylphosphonate, wie etwa: Dimethyl-2,5-di-tert.-butyl-4-hydroxybenzylphosphonat, Diethyl-3,5-di-tert.-butyl-4-hydroxybenzylphosphonat, Dioctadecyl-3,5-di-tert.-butyl-4-hydroxybenzylphosphonat, Dioctadecyl-5-tert.-butyl-4-hydroxy-3-methylbenzylphosphonat, Calciumslze der Monoethylester der 3,5-Di-tert.-butyl-4-hydroxybenzylphosphonsäure.
1.12 Acylaminophenole, wie etwa: 4-Hydroxylauranilid, 4-Hydroxystearanilid, Octyl-N-(3,5-di-tert.-butyl-4-hydroxyphenyl)carbamat.
1.13 Ester der β-(3,5-Di-tert.-butyl-4-hydroxyphenyl)propionsäure mit ein- oder mehrwertigen Alkoholen, wie etwa: Methanol, Ethanol, n-Octanol, Isooctanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)isocyanurat, N,N'-Bis(hydroxyethyl)oxalamid, 3-Thioundecanol, 3-Thiopentadecanol, Trimethylhexandiol, Trimethylolpropan, 4-Hydroxymethyl-1-phospha-2,6,7-trioxabicyclo[2.2.2]octan.
1.14 Ester der β-(5-tert.-Butyl-4-hydroxy-3-methylphenyl)propionsäure mit ein- oder mehrwertigen Alkoholen, wie etwa: Methanol, Ethanol, n-Octanol, Isooctanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)isocyanurat, N,N'-Bis(hydroxyethyl)oxalamid, 3-Thioundecanol, 3-Thiopentadecanol, Trimethylhexandiol, Trimethylolpropan, 4-Hydroxymethyl-1-phospha-2,6,7-trioxabicyclo[2.2.2]octan.
1.15 Ester der β-(3,5-Dicyclohexyl-4-hydroxyphenyl)propionsäure mit ein- oder mehrwertigen Alkoholen, wie etwa: Methanol, Ethanol, n-Octanol, Isooctanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)isocyanurat, N,N'-Bis(hydroxyethyl)oxalamid, 3-Thioundecanol, 3-Thiopentadecanol, Trimethylhexandiol, Trimethylolpropan, 4-Hydroxymethyl-1-phospha-2,6,7-trioxabicyclo[2.2.2]octan.
1.16 Ester der (3,5-Di-tert.-butyl-4-hydroxyphenyl)essigsäure mit ein- oder mehrwertigen Alkoholen, wie etwa: Methanol, Ethanol, n-Octanol, Isooctanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)isocyanurat, N,N'-Bis(hydroxyethyl)oxalamid, 3-Thioundecanol, 3-Thiopentadecanol, Trimethylhexandiol, Trimethylolpropan, 4-Hydroxymethyl-1-phospha-2,6,7-trioxabicyclo[2.2.2]octan.
1.17 Amide der β-(3,5-Di-tert.-butyl-4-hydroxyphenyl)propionsäure, wie etwa: N,N'-Bis(3,5-di-tert.-butyl-4-hydroxyphenylpropionyl)hexamethylendiamid, N,N'-Bis(3,5-di-tert.-butyl-4-hydroxyphenylpropionyl)trimethylendiamid, N,N'-Bis (3,5-di-tert.-butyl-4-hydroxyphenylpropionyl)hydrazid, N,N'-Bis[2-(3-[3,5-di-tert.-butyl-4-hydroxyphenyl]propionyloxy)ethyl]oxalmide (Naugar^{®} XL-1 der Fa. Uniroyal).
1.18 Ascorbinsäure und Derivate wie Vitamin C und Palmitolascorbat.
1.19 Aminantioxidantien, wie etwa: N,N'-Di-isopropyl-p-phenylendiamin, N,N'-Di-sec.-butyl-p-phenylendiamin, N,N'-Bis-(1,4-dimethylpentyl)-p-phenylendiamin, N,N'-Bis(1-ethyl-3-methylpentyl)-p-phenylendiamin, N,N'-Bis(1-methylheptyl)-p-phenylendiamin, N,N'-Dicyclohexyl-p-phenylendiamin, N,N'-Diphenyl-p-phenylendiamin, N,N'-Bis(2-naphthyl)-p-phenylendiamin, N-Isopropyl-N'-phenyl-p-phenylendiamin, N-(1,3-Dimethylbutyl)-N'-phenyl-p-phenylendiamin, N-(1-Methylheptyl)-N'-phenyl-p-phenylendiamin, N-Cyclohexyl-N'-phenyl-p-phenylendiamin, 4-(p-Toluolsulfamoyl)diphenylamin, N,N'-Dimethyl-N,N'-di-sec.-butyl-p-phenylendiamin, Diphenylamin, N-Allyldiphenylamin, 4-Isopropoxydiphenylamin, N-Phenyl-1-naphthylamin, N-(4-tert.-Octylphenyl)-1-naphthylamin, N-Phenyl-2-naphthylamin, Dioctylphenylamine, wie etwa p,p'-(Di-tert.-octylphenyl)amin, 4-n-Butylaminophenol, 4-Butyrylaminophenol, 4-Nonanoylaminophenol, 4-Dodecanoylaminophenol, 4-Octadecanoylaminophenol, Bis(4-methoxyphenyl)-amin, 2,6-Di-tert.-butyl-4-dimethylamino-methylphenol, 2,4' -Diamino-diphenylmethan, 4,4'-Diaminodiphenylmethan, N,N,N',N'-Tetramethyl-4,4'-diaminodiphenylmethan, 1,2-Bis[(2-methylphenyl)amino]ethan, 1,2-Bis(phenylamino)propan, Bis[4-(1',3'-dimethylbutyl)phenyl]amin, Mischungen von mono- und dialkylierten tert.-Butyl/tert.-Octyldiphenylaminen, Mischungen von mono- und dialkylierten Nonyldiphenylamine, Mischungen von mono- und dialkylierten Dodecyldiphenylaminen, Mischungen von mono- und dialkylierten Isopropyl/Isohexyldiphenylaminen, Mischungen von mono- und dialkylierten tert.-Butyldiphenylaminen, 2,3-Dihydro-3,3-dimethyl-4*H*-1,4-benzothiazin, Phenothiazin, Mischungen von mono- und dialkylierten tert.-Butyl/tert.-Octylphenothiazinen, Mischungen von mono- und dialkylierten tert.-Octylphenothiazinen, N-Allylphenothiazin, N,N,N',N'-Tetraphenyl-1,4-diaminobut-2-en, N,N-Bis(2,2,6,6-tetramethylpiperidin-4-yl)hexame-thylendiamin, Bis-(2,2,6,6-tetramethylpiperidin-4-yl)sebacat, 2,2,6,6-Tetramethylpiperidin-4-on, 2,2,6,6-Tetramethylpiperidin-4-ol.
1.20 Benzofuranone und Indolinone, wie etwa: die in den Schriften US 4,325,863, US 4,338,244, US 5,175,312, US 5,216,052, US 5,252,643, DE 43 16 611 A1, DE 43 16 622 A1, DE 43 16 876 A1, EP 589 839 A1 und EP 591 102 A1 offenbarten Verbindungen, 3-[4-(2-Acetoxyethoxy)phenyl]-5,7-di-tert.-butylbenzofuran-2-on, 3-[4-(2-(stearoyloxyethoxy)phenyl]-5,7-di-tert.-butylbenzofuran-2-on, 3,3'-Bis[5,7,-di-tert.butyl-3-(4-[2-hydroxyethoxy]phenyl)benzofuran-2-on, 5,7,-Di-tert.-butyl-3-(4-ethoxyphenyl)benzofuran-2-on, 3-(4-Acetoxy-3,5-dimethylphenyl)-5,7-di-tert.butylbenzofuranon-2-on, 3-(3,5-Dimethyl-4-pivaloyloxyphenyl)-5,7-di-tert.-butylbenzofuran-2-on, insbesondere die Verbindung der Formel 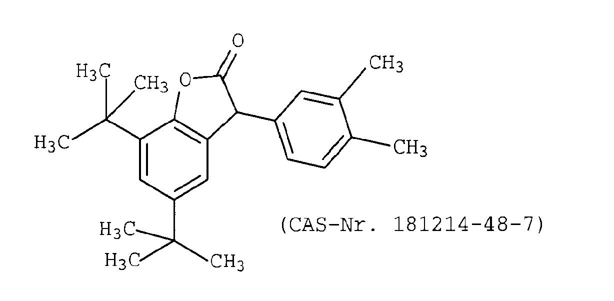
1.21 Verbindungen der Formeln: 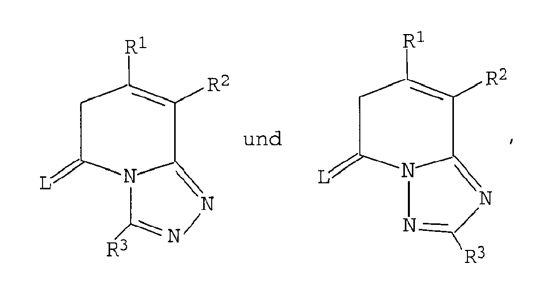 und dazu tautomere Verbindungen der Formeln 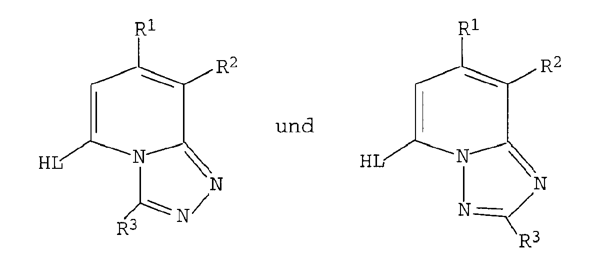 sowie 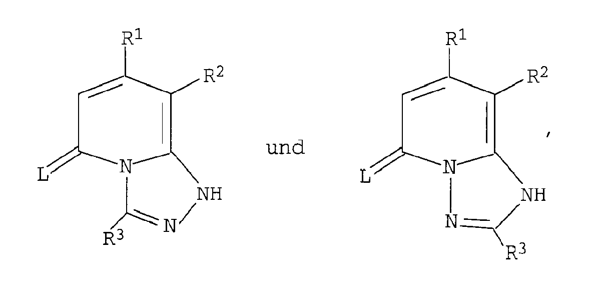 worin bedeuten
   R² gleich L' oder eine Gruppe -(R₂N)C=C(L')₂, wobei die beiden Reste R und L' jeweils gleich oder voneinander verschieden sein können; L' gleich -CN, -COR, COOR, -SO₂R; L gleich Sauerstoff, =NR oder Schwefel; und R¹, R³ und R unabhängig voneinander Wasserstoff; lineares oder verzweigtes C₁-C₂₄-Alkyl; lineares oder verzweigtes C₂-C₂₄-Alkenyl; lineares oder verzweigtes C₂-C₂₄-Alkinyl; lineares oder verzweigtes C₂-C₈-Alkoxyalkyl; gegebenenfalls substituiertes C₃-C₁₂-Cycloalkyl; ein gegebenenfalls substituierter, fünf- oder sechsgliedriger heterocyclischer Rest, welcher mindestens ein Heteroatom ausgewählt aus der Gruppe bestehend aus Sauerstoff, Stickstoff und Schwefel enthält; gegebenenfalls substituiertes C₆-C₂₀-Aryl.
   Die Herstellung dieser Verbindungen ist beispielsweise in der Schrift WO 95/04733 beschrieben, ihre Verwendung als Komponente von Stabilisatormischungen für Polymere ist aus der älteren deutschen Patentanmeldung 102 50 260.9 bekannt.

### 2. Weitere UV- und Lichtstabilisatoren

2.1 Nickelverbindungen, wie etwa: Nickelkomplexe von 2,2'-Thio-bis[4-(1,1,3,3-tetramethylbutyl)phenol], z.B. 1:1- oder 1:2-Komplexe, mit oder ohne zusätzliche Liganden, wie etwa n-Butylamin, Triethanolamin oder N-Cyclohexyldiethanolamin, Nickeldibutyldithiocarbamat, Nickelslze von Monoalkylester der 4-Hydroxy-3,5-di-tert.-butylbenzylphosphonsäure, wie etwa Methyl- oder Ethylester, Nickelkomplexe mit Ketoximen, wie etwa 2-Hydroxy-4-methylphenylundecylketoxim, Nickelkomplexe von 1-Phenyl-4-lauroyl-5-hydroxypyrazol mit oder ohne zusätzliche Liganden.
2.2 Weitere sterisch gehinderte Amine und ihre N-Alkoxyderivative, wie etwa: das Kondensationsprodukt aus 1-(2-Hydroxyethyl)-2,2,6,6-tetra-4-hydroxypiperidin und Bernsteinsäure, das Kondensationsprodukt, linear oder cyclisch, aus N,N'-Bis(2,2,6,6-tetramethyl-4-piperidinyl)hexamethylendiamin und 4-tert.-Octylamino-2,6-dichloro-1,3,5-s-triazin, Tris(2,2,6,6-tetramethyl-4-piperidinyl)nitrilotriacetat, Tetrakis(2,2,6,6-tetramethyl-4-piperidinyl)-1,2,3,4- butantetracarboxylat, 1,1'-(1,2-Ethandiyl)-bis(3,3,5,5-tetramethylpiperazinon, das Kondensationsprodukt, linear oder cyclisch, aus N,N'-Bis(2,2,6,6-tetramethyl-4-piperidinyl)hexamethylendiamin und 4-Morpholin-2,6-dichloro-1,3,5- triazin, das Kondensationsprodukt aus 2-Chloro-4,6-di-(4-n-butylamino-2,2,6,6-tetramethylpiperidinyl)-1,3,5-triazin und 1,2-Bis(3-aminopropylamino)ethan, das Kondensationsprodukt aus 2-Chloro-4,6-di-(4-n-butylamino-1,2,2,6,6-pentamethylpiperidinyl)-1,3,5-triazin und 1,2-Bis(3-aminopropylamino)ethan, 3-Dodecyl-1-(1,2,2,6,6-pentamethyl-4-piperidinyl)pyrrolidin-2,5-dion, eine Mischung aus 4-Hexadecyloxy- und 4-Stearyloxy-2,2,6,6-tetramethylpiperidin, das Kondensationsprodukt aus N-N'-Bis(2,2,6,6-tetramethyl-4-piperidinyl)hexamethylendiamin und 4-Cyclohexylamino-2,6-dichloro-1,3,5-triazin, das Kondensationsprodukt aus 1,2-Bis(3-amino-propylamino)ethan und 2,4,6-trichloro-1,3,5- triazin, 4-Butylamino-2,2,6,6-tetramethylpiperidin (CAS Reg. Nr. [136504-96-6], N-(2,2,6,6-Tetramethyl-4-piperidinyl)-n-dodecylsuccinimid, N-(1,2,2,6,6-Pentamethyl-4-piperidinyl)-n-dodecylsuccinimid, das Reaktionsprodukt aus 7,7,9,9-Tetramethyl-2-cycloundecyl-1-oxa-3,8-diaza-4-oxo-spiro[4.5]decan und Epichlorohydrin, 1,1-Bis(1,2,2,6,6-pentamethyl-4-piperidinyloxycarbonyl)-2-(4-methoxyphenyl)-ethen, der Diester von 2-Methoxy-methylenmalonsäure mit 1,2,2,6,6-Pentamethyl-4-hydroxypiperidin.
2.3 Oxamide, wie etwa: 4,4'-Dioctyloxyoxanilid, 2,2'-Diethoxyoxanilid, 2,2'-Dioctyloxy-5,5'-di-tert.-butoxanilid, 2,2'-Didodecyloxy-5,5'-di-tert.-butyloxanilid, 2-Ethoxy-2'-ethyloxanilid, N,N'-Bis(3-dimethylaminopropyl)oxamid, 2-Ethoxy-5-tert.-butyl-2'-ethoxanilid und seine Mischungen mit 2-Ethoxy-2'-ethyl-5,4'-di-tert.-butoxanilid, sowie Mischungen von disubstitierten ortho- und para-Methoxyoxaniliden und Mischungen von disubstitierten ortho- und para-Ethoxyoxaniliden.
3. "Metaldeaktivatoren", wie etwa: N,N-Diphenyloxamid, N-Salicylal-N'-salicyloylhydrazin, N,N'-Bis(salicyloyl)hydrazin, N,N'-Bis(3,5-di-tert.-butyl-4-hydroxyphenylpropionyl)hydrazin, 3-Salicyloylamino-1,2,4-triazol, Bis(benzyliden)oxallyldihydrazid, Oxanilid, Isophthaloyldihydrazid, Sebacoylbisphenylhydrazid, N,N'-Diacetyladipoyldihydrazid, N,N'-Bis(salicyloyl)oxallyldihydrazid, N,N'-Bis(salicyloyl)thiopropionyldihydrazid.
4. Hydroxylamine, wie etwa: N,N-Dibenzylhydroxylamin, N,N-Diethylhydroxylamin, N,N-Dioctylhydroxylamin, N,N-Dilaurylhydroxylamin, N,N-Ditetradecylhydroxylamin, N,N-Dihexadecylhydroxylamin, N,N-Dioctadecylhydroxylamin, N-Hexadecyl-N-octadecylhydroxylamin, N-Heptadecyl-N-octadecylhydroxylamin, N,N-Dialkylhydroxylamine abgeleitet von hydrierten Tallaminen.
5. Nitrone, wie etwa: N-Benzyl-α-phenylnitron, N-Ethyl-α-methylnitron, N-Octyl-α-heptylnitron, N-Lauryl-α-undecylnitron, N-Tetradecyl-α-tridecylnitron, N-Hexadecyl-α-pentadecylnitron, N-Octadecyl-α-heptadecylnitron, N-Hexadecyl-α-heptadecylnitron, N-Octadecyl-α-pentadecylnitron, N-Heptadecyl-α-heptadecylnitron, N-Octadecyl-α-hexadecylnitron, Nitron abgeleitet von hydrierten Tallaminen.
6. Thiosynergistische Agentien, wie etwa: Dilaurylthiodipropionat, Distearylthiodipropionat.
7. Agentien, welche zur Zerstörung von Peroxiden befähigt sind, wie etwa: Ester der β-Thiodipropionsäure, wie die Lauryl-, Stearyl-, Myristyl- oder Tridecylester, Mercaptobenzimidazol oder das Zinksalz von 2-Mercaptobenzimidazol, Zinkdibutyldithiocarbamat, Dioctadecyldisulfid, Pentaerythritoltetrakis(β-dodecylmercapto)propionat.
8. Polyamidstabilisatoren, wie etwa: Kupfersalze kombiniert mit Verbindungen des Iods und/oder Phosphors, Salze des zweiwertigen Mangans.
9. Basische Costabilisatoren, wie etwa: Melamin, Polyvinylpyrrolido, Dicyanodiamide, Triallylcyanurat, Derivate des Harnstoffs, Derivative des Hydrazins, Amine, Polyamide, Polyurethane, Alkali- und Erdalkalisalze von Fettsäuren mit einem hohen Molekulargewicht, wie etwa Calciumstearat, Zinkstearat, Magnesiumstearat, Magnesiumbehenat, Natriumrizinolat, Kaliumpalmitat, Antimonpyrocatecholat, Zinnpyrocatecholat, Zinkpyrocatecholat.
10. Nukleierungsreagentien/Kernbildungsmittel, wie etwa: anorganische Substanzen, wie Talkum, Metalloxide (z.B. Titandioxid oder Magnesiumoxid), Phosphate, Carbonate oder Sulfate (vorzugsweise der Erdalkalimetalle), organische Verbindungen, wie Mono- oder Polycarbonsäuren und ihre Salze (z.B. 4-tert.-Butylbenzoesäure, Adipinsäure, Diphenylessigsäure, Natriumsuccinat, Natriumbenzoat), polymere Verbindungen, wie ionische Copolymere ("Ionomere").
11. Füllstoffe und Verstärker, wie etwa: Calciumcarbonat, Silikate, Glasfasern, Glasperlen (-kügelchen), Talkum, Kaolin, Glimmer, Bariumsulfat, Metalloxide und -hydroxide, Ruß, Graphit, Holzmehl sowie Pulver und Fasern anderer natürlicher Produkte, synthetische Fasern.
12. Andere Additive, wie etwa: Weichmacher, Farbstoffe, Pigmente, Schmiermittel, Emulgatoren, Rheologiehilfsmittel, Katalysatoren, Gleitmittel, optische Aufheller, Flammschutzmittel, Antistatik-Hilfsmittel, Treibmittel.

Die oben genannten Stabilisatoren (Costabilisatoren) können den zu stabilisierenden Polymeren gegebenenfalls in einer Menge von 0,01 bis 10 Gew.-%, bezogen auf das Gewicht der zu stabilisierenden Polymeren, zugegeben werden.

Die unter Punkt 11. beschriebenen Füllstoffe und Verstärker, wie z.B. Talkum, Calciumcarbonat, Glimmer oder Kaolin, können den zu stabilisierenden Polymeren gegebenenfalls in einer Menge von 0,01 bis 40 Gew.-%, bezogen auf das Gewicht der zu stabilisierenden Polymeren, zugegeben werden.

Die unter Punkt 11. beschriebenen Füllstoffe und Verstärker, wie z.B. Metallhydroxide, insbesondere Aluminumhydroxid oder Magnesiumhydroxid, können den zu stabilisierenden Polymeren gegebenenfalls in einer Menge von 0,01 bis 60 Gew.-%, bezogen auf das Gewicht der zu stabilisierenden Polymeren, zugegeben werden.

Ruß als Füllstoff kann den zu stabilisierenden Polymeren gegebenenfalls in einer Menge von 0,01 bis 5 Gew.-%, bezogen auf das

Gewicht der zu stabilisierenden Polymeren, zugegeben werden.

Glasfasern als Verstärker können den zu stabilisierenden Polymeren gegebenenfalls in einer Menge von 0,01 bis 20 Gew.-%, bezogen auf das Gewicht der zu stabilisierenden Polymeren, zugegeben werden.

Weiterer Gegenstand der vorliegenden Erfindung ist auch ein Verfahren zur Stabilisierung von Polymeren, insbesondere Polyolefinen, gegen die Einwirkung von UV-Strahlung, Sauerstoff und Wärme, welches dadurch gekennzeichnet ist, dass man den Polymeren erfindungsgemäße Stabilisatormischungen, auch unter Berücksichtigung der bevorzugten Ausführungsformen, in einer effektiven Menge zugibt.

Die Einarbeitung der Komponenten (a) und (b) und/oder (c) und/oder (d) und/oder (e) und/oder (f) erfolgt -einzeln oder miteinander vermischt und gegebenenfalls mit anderen Stabilisatoren (Costabilisatoren)- in die zu stabilisierenden Polymere nach an sich bekannten Methoden, z.B. vor oder während der Verarbeitung, oder die erfindungsgemäßen Stabilisatormischungen werden in einem Lösungs- oder Suspendiermittel gelöst bzw. suspendiert und vor oder nach dem Verdunsten des Lösungs- oder Suspendiermittels den zu stabilisierenden Polymeren zugegeben. Ausgehend von den erfindungsgemäßen Stabilisatormischungen können auch Masterbatches hergestellt werden, welche erstere in einer Menge von 2,5 bis 25 Gew.-%, bezogen auf das Gesamtgewicht des Masterbatches, enthalten.

Die erfindungsgemäßen Stabilisatormischungen, gegebenenfalls in Gegenwart anderer Stabilisatoren (Costabilisatoren), können beispielsweise den zu stabilisierenden Polymeren nach der Polymerisation, aber auch während der Polymerisation oder vor der Vernetzung zugegeben werden.

Die erfindungsgemäßen Stabilisatormischungen, gegebenenfalls in Gegenwart anderer Stabilisatoren (Costabilisatoren), können den zu stabilisierenden Polymeren in Reinform, aber auch in Wachsen,

Ölen oder Polymeren eingeschlossen zugegeben werden.

Erfindungsgemäße Stabilisatormischungen, gegebenenfalls in Gegenwart anderer Stabilisatoren (Costabilisatoren), welche gelöst oder geschmolzen verwendet werden können, lassen sich auch in die zu stabilisierenden Polymere einsprühen. Dieses Einsprühen kann vorteilhaft mit Hilfe des während der Deaktivierung des Polymerisationskatalysators verwendeten Dampfes und zusammen mit dem

Dampf vorgenommen werden.

Im Fall von sphärisch polymerisierten Polyolefinen kann es von Vorteil sein, die erfindungsgemäßen Stabilisatormischungen, gegebenenfalls in Gegenwart anderer Stabilisatoren (Costabilisatoren), durch gemeinsames Versprühen hinzuzufügen.

Die erfindungsgemäß stabilisierten Polymere können in verschiedenster Weise, wie etwa als Filme, Fasern, Bänder, Schmelzzusammensetzungen, Profile oder Spritzgussteile verformt werden.

## Patentansprüche

1. Stabilisatormischungen, enthaltend
(a) mindestens ein Polymerpulver, welches wenigstens einen UV-Absorber enthält,
und mindestens eine weitere Komponente, ausgewählt aus der Gruppe bestehend aus:
(b) mindestens eine Verbindung ausgewählt aus der Gruppe bestehend aus organischen Phosphiten, organischen Phosphinen und organischen Phosphoniten,
(c) mindestens eine Verbindung ausgewählt aus der Gruppe bestehend aus sterisch gehinderten Phenolen,
(d) mindestens eine Verbindung ausgewählt aus der Gruppe bestehend aus sterisch gehinderten Aminen,
(e) mindestens eine Verbindung ausgewählt aus der Gruppe der Chromane und
(f) mindestens ein organisches oder anorganisches Salz ausgewählt aus der Gruppe bestehend aus Zink-, Calcium-, Magnesium-, Cer-, Eisen- und Mangansalzen.

2. Stabilisatormischungen nach Anspruch 1, wobei die Polymerteilchen des Polymerpulvers (a) eine Teilchengröge ≤ 500 nm aufweisen.

3. Stabilisatormischungen nach Anspruch 1 oder 2, wobei das Polymerpulver (a) 0,5 bis 50 Gew.-% des wenigstens einen UV-Absorbers bezogen auf das Gewicht der Polymermatrix enthält.

4. Verfahren zur Stabilisierung von Polymeren gegen die Einwirkung von UV-Strahlung, Sauerstoff und Wärme, **dadurch gekennzeichnet, dass** man den Polymeren Stabilisatormischungen nach einem oder mehreren der Ansprüche 1 bis 3 in einer effektiven Menge zugibt.

5. Verfahren nach Anspruch 4, **dadurch gekennzeichnet, dass** es sich bei den zu stabilisierenden Polymeren um Polyolefine handelt.

6. Gegen die Einwirkung von UV-Strahlung, Sauerstoff und Wärme stabilisierte Polymere, enthaltend eine effektive Menge von Stabilisatormischungen gemäß einem oder mehreren der Ansprüche 1 bis 3.

7. Gegen die Einwirkung von UV-Strahlung, Sauerstoff und Wärme stabilisierte Polyolefine, enthaltend eine effektive Menge von Stabilisatormischungen gemäß einem oder mehreren der Ansprüche 1 bis 3.

8. Gegenstände, welche aus Polymeren nach Anspruch 6 hergestellt worden sind.

9. Gegenstände, welche aus Polyolefinen nach Anspruch 7 hergestellt worden sind.

10. Stabilisatormischungen nach Anspruch 1, enthaltend (b) mindestens eine Verbindung ausgewählt aus der Gruppe bestehend aus organischen Phosphiten, organischen Phosphinen und organischen Phosphoniten.

11. Stabilisatormischungen nach Anspruch 1, enthaltend (c) mindestens eine Verbindung ausgewählt aus der Gruppe bestehend aus sterisch gehinderten Phenolen.

12. Stabilisatormischungen nach Anspruch 1, enthaltend (d) mindestens eine Verbindung ausgewählt aus der Gruppe bestehend aus sterisch gehinderten Aminen.

13. Stabilisatormischungen nach Anspruch 1, enthaltend (e) mindestens eine Verbindung ausgewählt aus der Gruppe der Chromane.

14. Stabilisatormischungen nach Anspruch 1, enthaltend (f) mindestens ein organisches oder anorganisches Salz ausgewählt aus der Gruppe bestehend aus Zink-, Calcium-, Magnesium-, Cer-, Eisen- und Mangansalzen.
